# EUROPEAN PATENT APPLICATION

(11) **EP 3 737 080 A1**
(43) Date of publication of application: **11.11.2020**
(21) Application number: 18908157.3
(22) Date of filing: 06.04.2018
(51) Int. Cl.: H04M 9/00, E05B 19/00, E05F 7/00

(54) **DOORBELL, KEY MANAGEMENT SYSTEM, AND INTERCOM SYSTEM**

(30) Priority: 27.02.2018 JP 2018033332; 27.02.2018 JP 2018033333; 27.02.2018 JP 2018033334; 27.02.2018 JP 2018033335; 27.02.2018 JP 2018033336
(71) Applicant: Aiphone Co., Ltd., Nagoya-shi, Aichi 460-0004 (JP)
(72) Inventor: YAMAKAWA Seiya, Nagoya-shi, Aichi 456-8666 (JP); DEN Mie, Tokyo 112-0004 (JP); FURUYA Takashi, Tokyo 112-0004 (JP); MIYAO Hiroyuki, Tokyo 112-0004 (JP); SOMURA Shinichiro, Nagoya-shi, Aichi 456-8666 (JP)
(74) Representative: Brevalex
(86) International application number: PCT/JP2018/014761
(87) International publication number: WO 2019/167291

(57) **Abstract**

A doorbell (2) includes an operation unit (22) capable of performing a calling operation, a camera (26), a microphone (23), a speaker (24), and a control unit (21) connected to the operation unit (22), the camera (26), the microphone (23) and the speaker (24) and capable of performing direct or indirect communication with an external device in which delivery item information relating to a delivery item is recorded. The control unit (21) is configured to acquire the delivery item information from the external device, and based on the delivery item information, to transmit a delivery notification of the delivery item to an information terminal (3) associated with a resident of a residence to which the doorbell (2) is attached.

## Description

### TECHNICAL FIELD

The present invention relates to a doorbell.

Also, the present invention relates to a key management system.

Also, the present invention relates to an intercom system.

### BACKGROUND ART

Known is a Wi-Fi doorbell including a speaker, a microphone, a camera, and an operation unit and capable of performing wireless communication with a remotely disposed computing device (refer to PTL 1 and the like).

Also, when there is nobody in a residence due to going out, for example, a resident cannot respond to a calling from a visitor. For this reason, for example, if a delivery person visits when the resident is absent, the delivery person performs re-delivery at the time when the resident is present, or leaves a delivery item at an entrance or the like and returns (refer to PTL 8). Therefore, a variety of delivery boxes for placing therein parcels delivered by delivery persons are suggested (refer to PTL 9).

### CITATION LIST

### PATENT LITERATURE

[PTL 1] U.S. Patent No. 9,094,584
[PTL 2] U.S. Patent No. 8,872,915
[PTL 3] U.S. Patent No. 9,237,318
[PTL 4] U.S. Patent No. 8,144,183
[PTL 5] U.S. Patent No. 9,432,638
[PTL 6] U.S. Patent No. 9,485,478
[PTL 7] U.S. Patent No. 9,516,284
[PTL 8] JP-A-2009-500262
[PTL 9] JP-A-2013-126498

### SUMMARY OF INVENTION

### TECHNICAL PROBLEM

In recent years, as mail order spreads, an amount of delivery items increases, and a labor of the re-delivery becomes problematic when a customer at a delivery destination is absent. For this reason, in order to reduce man-hour and cost of the re-delivery, a service is provided in which when a customer is absent, a delivery item is placed at an entrance of a delivery destination such as a house (so-called "safe drop" service). However, in the "safe drop" service, a delivery item may be stolen or lost

Also, services that can be provided by couriers when a customer is absent include a re-delivery service and a safe drop service. In the re-delivery service, the resident should request a delivery person to perform re-delivery, and a delivery person should perform the re-delivery. Also, in the safe drop service, the delivered parcel may be stolen. For this reason, it is tried to leave a spare key near the entrance, and to allow a visitor (for example a delivery person) to use the spare key and to place a delivery item in the house when a resident is absent. However, even in this case, someone other than an intended person may enter the house by using the spare key, so that there is room for improvement in crime prevention.

Also, most of the delivery boxes are for a housing complex, not a detached house. Therefore, the resident is not affected by a mischievous play of placing an item other than a delivery item in the delivery box. However, a delivery box for a detached house is recently used. Since the delivery box for a detached house is installed in a position in which anybody can open/close the delivery box, unlike the delivery box for housing complex, the mischievous play is likely to be performed. When the mischievous play is performed, the resident may be directly affected by the mischievous play.

It is therefore an object of the present invention to provide a doorbell that allows a resident to easily perceive delivery item information.

Also, the present invention is to provide a doorbell capable of watching a delivery item placed at an entrance.

Also, the present invention is to provide a key management system capable of safely managing a key provided outdoors.

Also, the present invention is to provide an intercom system capable of suppressing an influence of a mischievous play on a delivery box on a resident while preventing the delivery box from being opened for the mischievous play.

### SOLUTION TO PROBLEM

In order to achieve the above object, a doorbell of the present invention includes:
an operation unit capable of performing a calling operation,
a camera,
a microphone,
a speaker, and
a control unit connected to the operation unit, the camera, the microphone and the speaker, and capable of performing direct or indirect communication with an external device in which delivery item information relating to a delivery item is recorded,
wherein the control unit is configured to acquire the delivery item information from the external device, and based on the delivery item information, to transmit a delivery notification of the delivery item to an information terminal associated with a resident of a residence to which the doorbell is attached.

According to the above configuration, it is possible to provide the doorbell that allows the resident to easily perceive the delivery item information by informing the delivery notification to the information terminal of the resident.

Also, in the above doorbell,
the control unit may be configured to receive a reply notification from the information terminal having received the delivery notification, and to perform an automatic reception operation for automatically receiving the delivery item, based on the reply notification.

According to the above configuration, it is possible to reduce re-delivery of the delivery item when the resident is absent.

Also, in the above doorbell,
the automatic reception operation may include at least one of a voice guide from the speaker and transmission of an automatic receipt to the external device.

According to the above configuration, a delivery person can easily perceive that the resident wants automatic reception, and can acquire and issue an automatic receipt as a certificate of delivery completion.

In order to achieve the above object, a doorbell of the present invention includes:
an operation unit capable of performing a calling operation,
a camera,
a microphone,
a speaker, and
a control unit connected to the operation unit, the camera, the microphone and the speaker, and capable of performing communication with an external device in which delivery item information relating to a delivery item is recorded,
wherein the control unit is configured to change a capturing range of the camera, based on the delivery item information.

According to the above configuration, for example, when the delivery item is placed at an entrance, the capturing range of the camera is changed to a range in which the delivery item can be captured, so that it is possible to watch the delivery item.

Also, in the above doorbell,
the capturing range may include a vicinity of a lower part of the doorbell within a predetermined time from a delivery time included in the delivery item information, and may include a part ahead of the doorbell after the predetermined time elapses.

The capturing range is preferably changed within the above range.

Also, in the above doorbell,
the control unit may be configured to transmit an image of the delivery item captured by the camera within a predetermined time from a delivery time of the delivery item to an information terminal associated with the doorbell, based on the delivery item information.

According to the above configuration, the resident can easily watch the delivery item.

Also, in the above doorbell,
when it is determined that the delivery item has disappeared from the image, the control unit may transmit an alarm, which indicates that the delivery item is not included in the image, to the information terminal.

According to the above configuration, the resident can recognize immediately that the delivery item is stolen or lost, for example.

Also, in the above doorbell,
when it is determined that the delivery item has disappeared from the image, the control unit may output an alarm voice, which indicates that the delivery item is not included in the image, from the speaker.

According to the above configuration, a sound, which indicates that the delivery item has disappeared from the image, is output from the doorbell, so that it is possible to issue a warning of theft or loss around the doorbell, which is helpful to prevent theft.

Also, in the above doorbell,
the control unit may be configured to transmit a delivery notification of the delivery item to an information terminal associated with the doorbell, based on the delivery item information, to receive a reply notification from the information terminal having received the delivery notification, and to perform an automatic reception operation for automatically receiving the delivery item, based on the reply notification, and
the delivery time may include a time at which the automatic reception operation has been performed.

According to the above configuration, the capturing range is changed so that the delivery item is included in the capturing range of the camera by using, as a trigger, the time when the delivery item is placed at the entrance by the safe drop service. As a result, it is possible to appropriately capture the delivery item.

A key management system in accordance with an aspect of the present invention includes:
a doorbell,
a key for opening an entrance door, and
a key box in which the key can be kept,
wherein at least one of the doorbell and the key box includes a camera capable of reading a two-dimensional code, and
wherein when a two-dimensional code in which password information for releasing a closed state of the key box is embedded is read by the camera, the closed state of the key box is released.

According to the above configuration, in order to release the closed state of the key box in which the key is kept, the two-dimensional code having the password information embedded therein should be read by the camera equipped on the doorbell or the key box. For this reason, it is possible to prevent an unintended person from acquiring the key kept in the key box because a person who can acquire the key kept in the key box is limited to a person to whom a resident has transmitted in advance the two-dimensional code having the password information embedded therein.

As such, according to the above configuration, it is possible to provide the key management system capable of safely managing a key provided outdoors.

Also, a key management system in accordance with an aspect of the present invention includes:
a doorbell,
a key for opening an entrance door, and
a key box in which the key can be kept,
wherein the doorbell includes:
   a camera capable of capturing a face of a visitor,
   a storage unit in which face information can be stored, and
   a determination unit configured to compare an image captured by the camera and the face information stored in the storage unit, and to determine whether or not a same person,
   wherein the doorbell can perform communication with the key box, and
   wherein when the determination unit determines that a person captured in the image matches a person associated with the face information, a closed state of the key box is released.

According to the above configuration, the face of the visitor captured by the camera and the face information stored in the storage unit are compared, and the closed state of the key box in which the key is kept is released only when they are associated with each other. For this reason, since a person who can acquire the key kept in the key box is limited to a person who is stored in advance in the storage unit by a resident, it is possible to prevent an unintended person from acquiring the key kept in the key box.

As such, according to the above configuration, it is possible to provide the key management system capable of safely managing a key provided outdoors.

Also, a key management system in accordance with an aspect of the present invention includes:
a doorbell,
a key for opening an entrance door, and
a key box in which the key can be kept,
wherein the doorbell includes:
   a fingerprint recognition unit capable of reading a fingerprint of a visitor,
   a storage unit in which fingerprint information can be stored, and
   a determination unit configured to compare the fingerprint read by the fingerprint recognition unit and the fingerprint information stored in the storage unit and to determine whether or not a same person,
   wherein the doorbell can perform communication with the key box, and
   wherein when the determination unit determines that the fingerprint read by the fingerprint recognition unit matches the fingerprint information stored in the storage unit, a closed state of the key box is released.

According to the above configuration, the closed state of the key box in which the key is kept is released only when the determination unit determines that the fingerprint read by the fingerprint recognition unit matches the fingerprint information stored in the storage unit. For this reason, it is possible to prevent an unintended person from acquiring the key kept in the key box because a person who can acquire the key kept in the key box is limited to a person who has the fingerprint stored in advance in the storage unit by a resident.

As such, according to the above configuration, it is possible to provide the key management system capable of safely managing a key provided outdoors.

Also, a key management system in accordance with an aspect of the present invention includes:
a doorbell,
a key for opening an entrance door, and
a key box in which the key can be kept,
wherein the doorbell includes an operation unit to which password information for releasing a closed state of the key box can be input, and
wherein when a predetermined password is input to the operation unit, the closed state of the key box is released.

According to the above configuration, the closed state of the key box in which the key is kept is released only when the predetermined password is input. For this reason, it is possible to prevent an unintended person from acquiring the key kept in the key box because a person who can acquire the key kept in the key box is limited to a person who knows a password.

As such, according to the above configuration, it is possible to provide the key management system capable of safely managing a key provided outdoors.

Also, in the key management system in accordance with an aspect of the present invention,
the predetermined password is changed when a predetermined time elapses.

According to the above configuration, since the predetermined password is a so-called one-time password, the password is frequently changed when the predetermined time elapses.

As such, according to the above configuration, it is possible to provide the key management system capable of safely managing a key provided outdoors.

Also, in the key management system in accordance with an aspect of the present invention,
the entrance door includes a sensor configured to detect that the entrance door is opened and a notification unit configured to notify a terminal of a resident that the entrance door is opened,
the doorbell can perform communication with the entrance door and the terminal of the resident via a network, and
when the sensor detects that the entrance door is opened, the notification unit notifies the terminal of the resident that the entrance door is opened.

According to the above configuration, when an entrance door of a residence is opened, it is notified to a resident. For this reason, even though the resident is in a remote place, the resident can recognize that the entrance door has been opened, and that the key provided outdoors has been used.

As such, according to the above configuration, it is possible to provide the key management system capable of safely managing a key provided outdoors.

Also, in the key management system in accordance with an aspect of the present invention,
the doorbell includes a camera, and
when the closed state of the key box is released, the camera of the doorbell starts capturing.

According to the above configuration, when the closed state of the key box is released, the camera provided on the doorbell starts capturing. For this reason, since a visitor who has released the closed state of the key box is captured by the camera, it is possible to improve crime prevention.

As such, according to the above configuration, it is possible to provide the key management system having improved crime prevention.

Also, in the key management system in accordance with an aspect of the present invention,
when the closed state of the key box is released, the terminal of the resident is notified that the closed state of the key box is released.

According to the above configuration, when the closed state of the key box is released, the terminal of the resident is notified that the closed state of the key box is released. Therefore, it is possible to improve crime prevention.

As such, according to the above configuration, it is possible to provide the key management system having improved crime prevention.

Also, in the key management system in accordance with an aspect of the present invention,
the doorbell includes a camera, and
when the terminal of the resident is notified that the closed state of the key box is released, the doorbell transmits, to the terminal of the resident, an image captured by the camera of the doorbell after the closed state of the key box is released.

According to the above configuration, when notifying the terminal of the resident that the closed state of the key box is released, the doorbell transmits an image of a visitor captured by the camera of the doorbell to the terminal of the resident. For this reason, the resident can know that the closed state of the key box has been released and a person who has released the closed state of the key box.

Also, the key management system in accordance with an aspect of the present invention further includes an in-house camera provided in a residence, and
when the entrance door is opened, the in-house camera starts capturing.

According to the above configuration, when the entrance door of the residence is opened, the in-house camera installed in the residence starts capturing. For this reason, it is possible to improve crime prevention because it is possible to capture a visitor who enters the residence.

As such, according to the above configuration, it is possible to provide the key management system having improved crime prevention.

Also, in the key management system in accordance with an aspect of the present invention,
when the key is kept in the key box in a state where the key is not kept in the key box, the camera of the doorbell captures a visitor.

According to the above configuration, when the key is kept in the key box in a state where the key is not kept in the key box, the camera of the doorbell captures a visitor. For this reason, it is possible to improve crime prevention because it is possible to capture a visitor who enters and then leaves the residence.

As such, according to the above configuration, it is possible to provide the key management system having improved crime prevention.

Also, in the key management system in accordance with an aspect of the present invention,
the key box is provided with a camera capable of capturing a visitor, and
when the key is kept in the key box in a state where the key is not kept in the key box, the camera of the key box captures a visitor.

According to the above configuration, when the key is kept in the key box in a state where the key is not kept in the key box, the camera of the key box captures a visitor. For this reason, it is possible to improve crime prevention because it is possible to capture a visitor who enters and then leaves the residence.

As such, according to the above configuration, it is possible to provide the key management system having improved crime prevention.

An intercom system in accordance with an aspect of the present invention includes:
an entrance slave unit that is operated by a visitor,
a terminal configured to respond to a calling from the entrance slave unit, and
a delivery box in which a delivery item can be accommodated,
wherein the entrance slave unit, the terminal, the delivery box can perform communication,
wherein the delivery box includes a door and a detection unit configured to detect an opened state of the door,
wherein when the detection unit detects that the door is opened, the detection unit transmits an open signal to the terminal, and
wherein when the terminal receives the open signal, the terminal informs a resident that the door is opened.

According to the above configuration, when the door of the delivery box becomes in the opened state, the opened state is informed to the resident. For this reason, when the delivery box is opened due to a mischievous play, for example, the resident can know the same and can take some action.

As such, according to the above configuration, it is possible to provide the intercom system capable of suppressing an influence of the mischievous play on the delivery box on the resident.

Also, in the intercom system in accordance with an aspect of the present invention,
the informing is performed by outputting an informing sound.

According to the above configuration, when the door of the delivery box becomes in the opened state, the opened state is informed to the resident by the informing sound. For this reason, the resident can know that the door of the delivery box becomes in the opened state, without monitoring the terminal.

Also, in the intercom system in accordance with an aspect of the present invention,
when the detection unit detects the opened state of the door, a notification sound for notifying the opened state is output from the entrance slave unit.

According to the above configuration, when the door of the delivery box becomes in the opened state, the notification sound is output from the entrance slave unit. For this reason, it is possible to suppress more effectively the mischievous play of opening the delivery box.

Also, in the intercom system in accordance with an aspect of the present invention,
the entrance slave unit includes a camera, and
when the detection unit detects the opened state of the door, the camera starts capturing.

According to the above configuration, when the door of the delivery box becomes in the opened state, the camera of the entrance slave unit starts capturing of a visitor. For this reason, it is possible to specify a person who has opened the door of the delivery box. Also, when the captured data is configured to be saved, it is possible to save an evidence indicating that the person has opened the door of the delivery box.

Also, in the intercom system in accordance with an aspect of the present invention,
the delivery box has an electric lock for keeping a closed state of the door,
the entrance slave unit has a camera, and
when the entrance slave unit detects that an image indicating that a visitor is a delivery person is captured by the camera, the electric lock is unlocked.

According to the above configuration, the electric lock of the delivery box is unlocked only when a visitor is a delivery person. For this reason, it is possible to further prevent a situation that the delivery box is opened by a visitor who has a purpose for a mischievous play.

Also, in the intercom system in accordance with an aspect of the present invention,
the terminal includes an operation unit for outputting an alert or a voice from the entrance slave unit, and
when an operation is performed via the operation unit, an alert or a voice is output from the entrance slave unit.

According to the above configuration, when a resident determines that a visitor tries to open the delivery box for a mischievous play, the resident can operate the operation unit to output an alert or a voice from the entrance slave unit. For this reason, it is possible to suppress the delivery box from being opened by a visitor who has a purpose for a mischievous play.

An intercom system in accordance with an aspect of the present invention includes:
an entrance slave unit that is operated by a visitor,
a terminal configured to respond to a calling from the entrance slave unit, and
a delivery box in which a delivery item can be accommodated,
wherein the entrance slave unit, the terminal, the delivery box can perform communication,
wherein the delivery box includes a door and an electric lock for keeping a closed state of the door, and
wherein when a signal for unlocking the electric lock is generated, the terminal informs a resident that the electric lock is unlocked.

According to the above configuration, the delivery box is provided with the electric lock, so that a visitor cannot open the delivery box unless the visitor unlocks the electric lock. Also, when a signal for unlocking the electric lock is generated, the terminal notifies a resident that the electric lock is unlocked. For this reason, the resident can know a visitor who tries to open the delivery box for a mischievous play, in a stage where the electric lock is unlocked, i.e., before the door of the delivery box is opened.

As such, according to the above configuration, it is possible to provide the intercom system capable of suppressing an influence of a mischievous play on the delivery box on a resident while preventing the delivery box from being opened for the mischievous play.

Also, in the intercom system in accordance with an aspect of the present invention,
the informing is performed by outputting an informing sound.

According to the above configuration, the resident is informed by the informing sound that the electric lock is unlocked. For this reason, the resident can know that the electric lock is unlocked, without monitoring the terminal.

Also, in the intercom system in accordance with an aspect of the present invention,
the entrance slave unit includes a camera, and
when the signal for unlocking the electric lock is generated, the camera starts capturing.

According to the above configuration, when a signal for unlocking the electric lock is generated, the camera of the entrance slave unit starts capturing of a visitor. For this reason, it is possible to specify a visitor at the time when the electric lock is unlocked. Also, when the captured data is configured to be saved, it is possible to save an evidence indicating that the visitor has unlocked the electric lock.

Also, in the intercom system in accordance with an aspect of the present invention,
the entrance slave unit includes a camera, and
when the entrance slave unit detects that an image, which indicates that a visitor is a delivery person, is captured by the camera, the signal for unlocking the electric lock is generated.

According to the above configuration, the electric lock of the delivery box is unlocked only when a visitor is a delivery person. For this reason, it is possible to further prevent a situation that the electric lock is unlocked by a visitor who has a purpose for a mischievous play.

Also, in the intercom system in accordance with an aspect of the present invention,
the delivery box includes a detection unit configured to detect an opened state of the door, and
when the detection unit detects an opened state of the door, a notification sound for notifying the opened state of the door is output from the terminal.

According to the above configuration, when the door of the delivery box becomes in the opened state, the notification sound is output from the terminal. For this reason, a resident can know whether the door of the delivery box is actually opened after the electric lock is unlocked.

Also, in the intercom system in accordance with an aspect of the present invention,
the terminal includes an operation unit for outputting an alert or a voice from the entrance slave unit, and
when an operation is performed via the operation unit, an alert or a voice is output from the entrance slave unit.

According to the above configuration, when a user determines that a visitor tries to open the delivery box for a mischievous play, the user can operate the operation unit to output an alert or a voice from the entrance slave unit. For this reason, it is possible to suppress the delivery box from being opened by a visitor who has a purpose for a mischievous play.

### ADVANTAGEOUS EFFECTS OF INVENTION

According to the present invention, it is possible to provide the doorbell that allows the resident to easily perceive the delivery item information.

Also, according to the present invention, it is possible to provide the doorbell capable of watching the delivery item placed at the entrance.

Also, according to the present invention, it is possible to provide the key management system capable of safely managing the key provided outdoors.

Also, according to the present invention, it is possible to provide the intercom system capable of suppressing an influence of a mischievous play on the delivery box on a resident while preventing the delivery box from being opened for the mischievous play.

### BRIEF DESCRIPTION OF DRAWINGS

[FIG. 1] FIG. 1 depicts a configuration of a doorbell system in accordance with a first embodiment of the present invention.
[FIG. 2] FIG. 2 is a functional block diagram depicting a configuration of a doorbell of the doorbell system shown in FIG. 1.
[FIG. 3] FIG. 3 depicts a configuration of an information terminal provided for the doorbell system shown in FIG. 1.
[FIG. 4] FIG. 4 is a flowchart for illustrating operations of an automatic reception function of a delivery item that is executed by the doorbell system shown in FIG. 1.
[FIG. 5] FIG. 5 depicts an example of a screen that is displayed on the information terminal carried by a resident when executing the automatic reception operation.
[FIG. 6] FIG. 6 depicts an example of a screen when an automatic reception selection notification is displayed on an external device carried by a delivery person.
[FIG. 7] FIG. 7 is a flowchart for illustrating an example of processing that is executed when a user does not select automatic reception.
[FIG. 8] FIG. 8 depicts an example of a screen when an automatic reception non-selection notification is displayed on the external device carried by the delivery person.
[FIG. 9] FIG. 9 is a flowchart for illustrating operations of a delivery item monitoring function that is executed by the doorbell system shown in FIG. 1.
[FIG. 10] FIG. 10 is a pictorial view depicting an example of changing a capturing range of a camera.
[FIG. 11] FIG. 11 depicts an example of a screen for causing the user to select whether or not to display an image of a delivery item captured by a camera on the information terminal.
[FIG. 12] FIG. 12 depicts an example of outputting an alarm voice from a speaker of the doorbell.
[FIG. 13] FIG. 13 depicts a key management system in accordance with a second embodiment of the present invention.
[FIG. 14] FIG. 14 is a functional block diagram of the key management system.
[FIG. 15] FIG. 15 is a flowchart depicting a flow until a closed state of a key box is released, in the key management system where authentication by a two-dimensional code is used.
[FIG. 16] FIG. 16 is a flowchart depicting a flow until a closed state of the key box is released, in the key management system where face recognition is used.
[FIG. 17] FIG. 17 is a flowchart depicting a flow until a closed state of the key box is released, in the key management system where fingerprint authentication is used.
[FIG. 18] FIG. 18 is a flowchart depicting a flow until a closed state of the key box is released, in the key management system where a password is input.
[FIG. 19] FIG. 19 is a flowchart depicting a flow after a closed state of the key box is released until a notification indicating the release is sent to a terminal.
[FIG. 20] FIG. 20 is a flowchart depicting a flow after an entrance door is opened until image data captured by an in-house camera is displayed on the terminal.
[FIG. 21] FIG. 21 is a flowchart depicting a flow until a camera of the doorbell starts capturing of a visitor when the visitor returns a key to the key box and gets back.
[FIG. 22] FIG. 22 is a flowchart depicting a flow until a camera of the key box starts capturing of a visitor when the visitor returns the key to the key box and gets back.
[FIG. 23] FIG. 23 is a pictorial view of an intercom system in accordance with a third embodiment of the present invention.
[FIG. 24] FIG. 24 is a functional block diagram of the intercom system in accordance with the third embodiment.
[FIG. 25] FIG. 25 is a sequence diagram depicting a flow of operations of the intercom system with no electric lock in accordance with the third embodiment.
[FIG. 26] FIG. 26 is a sequence diagram depicting a flow of operations of the intercom system with an electric lock in accordance with the third embodiment.
[FIG. 27] FIG. 27 is a functional block diagram of an intercom system in accordance with a fourth embodiment.
[FIG. 28] FIG. 28 is a sequence diagram depicting a flow of operations of the intercom system with no electric lock in accordance with the fourth embodiment.
[FIG. 29] FIG. 29 is a sequence diagram depicting a flow of operations of the intercom system with an electric lock in accordance with the fourth embodiment.
[FIG. 30] FIG. 30 is a functional block diagram of an intercom system in accordance with a fifth embodiment.
[FIG. 31] FIG. 31 is a sequence diagram depicting a flow of operations of the intercom system with no electric lock in accordance with the fifth embodiment.
[FIG. 32] FIG. 32 is a sequence diagram depicting a flow of operations of the intercom system with an electric lock in accordance with the fifth embodiment.
[FIG. 33] FIG. 33 is a sequence diagram depicting a flow of operations of an intercom system with an electric lock in accordance with a sixth embodiment.
[FIG. 34] FIG. 34 is a sequence diagram depicting a flow of operations of an intercom system with an electric lock in accordance with a seventh embodiment.

### DESCRIPTION OF EMBODIMENTS

### (First Embodiment)

Hereinbelow, an example of a first embodiment is described with reference to the drawings.

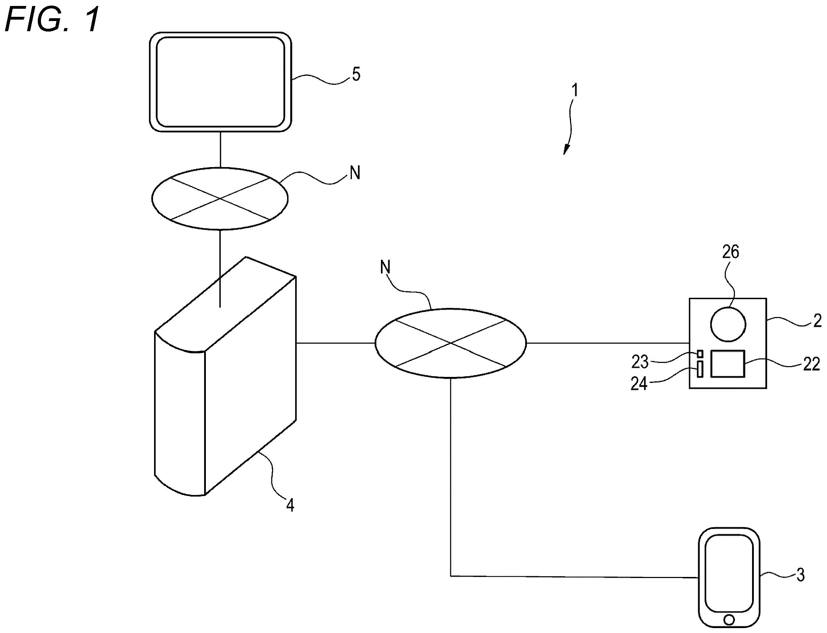

FIG. 1 depicts a configuration of a doorbell system in accordance with a first embodiment.

As shown in FIG. 1, a doorbell system 1 includes a doorbell 2, an information terminal 3, a server 4, and an external device 5. The doorbell 2 and the information terminal 3 can perform communication with the server 4 on an external network via a network N. As a communication device configured to relay the doorbell 2 and information terminal 3 and the network N, for example, a Wi-Fi router may be used. Also, the server 4 and the external device 5 can perform communication with each other via the network N.

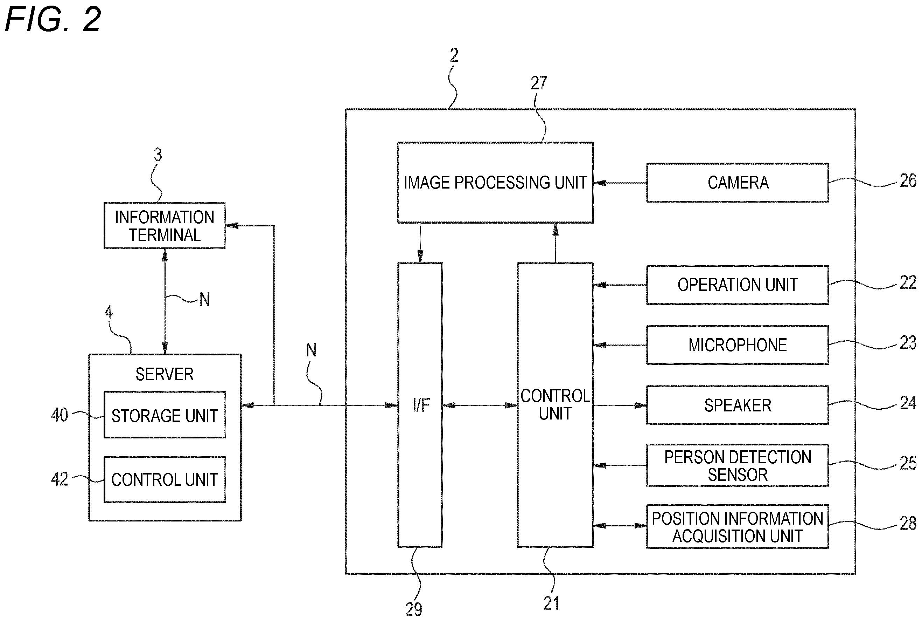

FIG. 2 is a functional block diagram of the doorbell 2.

The doorbell 2 is used so as for a visitor to call a resident for phone call, and is installed in an entrance of each building (a detached house or the like), for example. The doorbell 2 is electrically connected to a power system of the building, to which the doorbell is attached, by a predetermined wire, so that power is supplied thereto from the power system. In the meantime, the doorbell 2 may include a battery for backup and/or primary power.

As shown in FIG. 2, the doorbell 2 includes a control unit 21, an operation unit 22, a microphone 23, a speaker 24, a person detection sensor 25, a camera 26, an image processing unit 27, a position information acquisition unit 28, and an interface circuit (hereinbelow, the interface circuit is referred to as "I/F") 29.

The control unit 21 is a control unit for controlling operations of each unit of the doorbell 2, and may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit). The CPU may include a plurality of CPU cores. The GPU may include a plurality of GPU cores. The memory includes a ROM (Read Only Memory) and a RAM (Random Access Memory). In the ROM, a doorbell control program may be stored. In the RAM, the doorbell control program may be temporarily stored. The processor may be configured to develop a program designated from the doorbell control program stored in a storage device or the ROM onto the RAM, and to execute a variety of processing in cooperation with the RAM

Also, the control unit 21 may be configured by an integrated circuit (hardware resource) such as an ASIC (Application Specific Integrated Circuit), FPGA (Field-Programmable Gate Array) and the like. Also, the control unit 21 may be configured by a combination of at least one microcontroller and an integrated circuit.

The operation unit 22 is configured to receive a variety of input operations of a visitor. The diverse input operations include a calling to a resident, for example. The microphone 23 and the speaker 24 configure a phone call unit for transmitting voice data of a message and the like of a visitor toward a resident (in the present example, the information terminal 3 of a resident in a building in which the doorbell 2 is installed) and outputting voice data of a message and the like of the resident toward the visitor.

The person detection sensor 25 is a sensor for detecting a person in front of the doorbell 2, and is configured by an infrared sensor, for example. The person detection sensor 25 is connected to the camera 26 via the control unit 21. The person detection sensor 25 is configured to output a detection signal for informing detection of a person to the camera 26. The camera 26 is a capturing device for capturing a person such as a visitor. The camera 26 may be configured by a video camera that is a web camera. For example, the camera 26 is activated by the detection signal that is output from the person detection sensor 25. An image captured by the camera 26 is output to the image processing unit 27. The image processing unit 27 is configured to transmit the image data acquired from the camera 26 to the server 4 via the I/F 29, based on a control signal of the control unit 21.

The position information acquisition unit 28 is configured to acquire position information of the doorbell 2. The position information is acquired using a GPS (Global Positioning System), for example. In the meantime, when installing the doorbell 2 in a building, the position information of the doorbell 2 may be registered in advance in the position information acquisition unit 28 by a resident. The control unit 21 is configured to transmit the position information acquired by the position information acquisition unit 28 to the server 4. The control unit 21 is configured to transmit, to the server 4, the position information upon initial setting at the time the doorbell 2 is attached to each residence. In the meantime, when the position information of the doorbell 2 is updated, the control unit 21 may transmit the updated position information to the server 4.

The I/F 29 can perform communication with the server 4 via the network N. Specifically, the I/F 29 can perform communication with the server 4 by a network communication means such as wireless local area network (LAN), radio, cellular, the Internet, Bluetooth (registered trademark), electromagnetic wave, infrared light, sonic wave, microwave and the like. As such, the doorbell 2 can transmit predetermined data (for example, voice data and image data) to the server 4 and start communication by a two-way voice call or the like between a visitor and a user of the information terminal 3. In the meantime, the I/F 29 of the doorbell 2 may also be configured to directly perform communication with the information terminal 3.

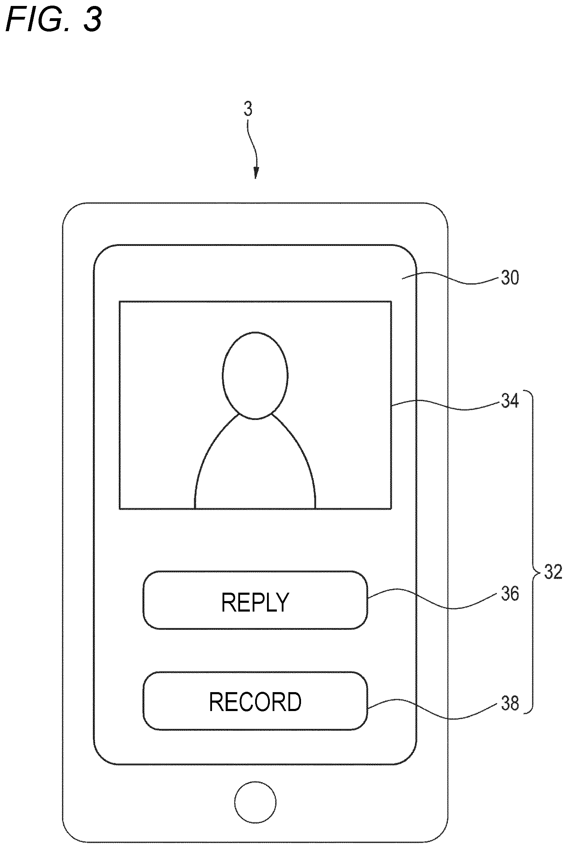

FIG. 3 depicts a configuration of the information terminal 3.

The information terminal 3 is used so as for a resident (user) in a residence in which the doorbell 2 is installed to respond to a calling from the doorbell 2, for example. The information terminal 3 includes, for example, a smartphone, a tablet computer and other portable information terminal carried by the resident. The doorbell 2 and the information terminal 3 can perform communication with each other via the server 4.

The information terminal 3 includes a touch screen type display unit 30 capable of displaying a predetermined user interface 32, as shown in FIG. 3. The information terminal 3 is configured to execute predetermined computer software (for example, application software for voice call and image display), based on data transmitted from the doorbell 2. For example, the information terminal 3 can execute the predetermined application software, based on an input on the user interface 32 displayed on the display unit 30. The user interface 32 includes an image display unit 34 on which a display image of a still image or a moving picture is displayed based on image data of a front area captured by the camera 26 of the doorbell 2. Also, the user interface 32 includes a response permission receiving unit 36 for permitting a user to respond to a calling of a visitor. When the user touches the response permission receiving unit 36, two-way voice communication starts so as to respond to a calling of the visitor. Also, the user interface 32 includes a recording receiving unit 38 for allowing the user to select recording of a display image displayed on the image display unit 34. When the user touches the recording receiving unit 38, a display image that is displayed on the image display unit 34 can be recorded.

As shown in FIG. 2, the server 4 includes a storage unit 40, and a control unit 42. The storage unit 40 is configured by a memory including a ROM and a RAM, for example. The control unit 42 includes at least one microcontroller including one or more processors and one or more memories, and other electronic circuit including an active element such as a transistor and a passive element. Also, the control unit 42 may be configured by an integrated circuit (hardware resource) or may be configured by a combination of at least one microcontroller and an integrated circuit.

The control unit 42 can store data (image data and voice data) transmitted from the doorbell 2 in the storage unit 40 and transmit the data to the information terminal 3. Also, the control unit 42 can store the data transmitted from the information terminal 3 in the storage unit 40, and transmit the data to the doorbell 2. As such, the server 104 can start communication by a two-way voice call or the like between a visitor who visits a building in which the doorbell 2 is installed and a user of the information terminal 3 by transmitting and receiving predetermined data (for example, voice data and image data) between the doorbell 2 and the information terminal 3. In the meantime, as described above, the data can also be directly transmitted and received between the doorbell 2 and the information terminal 3 without via the server 4.

Also, the control unit 42 can store, in the storage unit 4, the position information of the doorbell 2 acquired by the position information acquisition unit 28 of the doorbell 2 and transmitted from the doorbell 2 to the server 4.

The external device 5 is a device such as a smartphone, a tablet computer or the like carried by a delivery person of a delivery item, for example, and delivery item information relating to the delivery item is recorded therein. The delivery item information includes a content of the delivery item, an address of a delivery destination, a delivery time and the like. The external device 5 can perform communication with the doorbell 2 via the server 4, and transmit the delivery item information to the doorbell 2 via the server 4.

### (Description of Automatic Reception Function of Delivery Item)

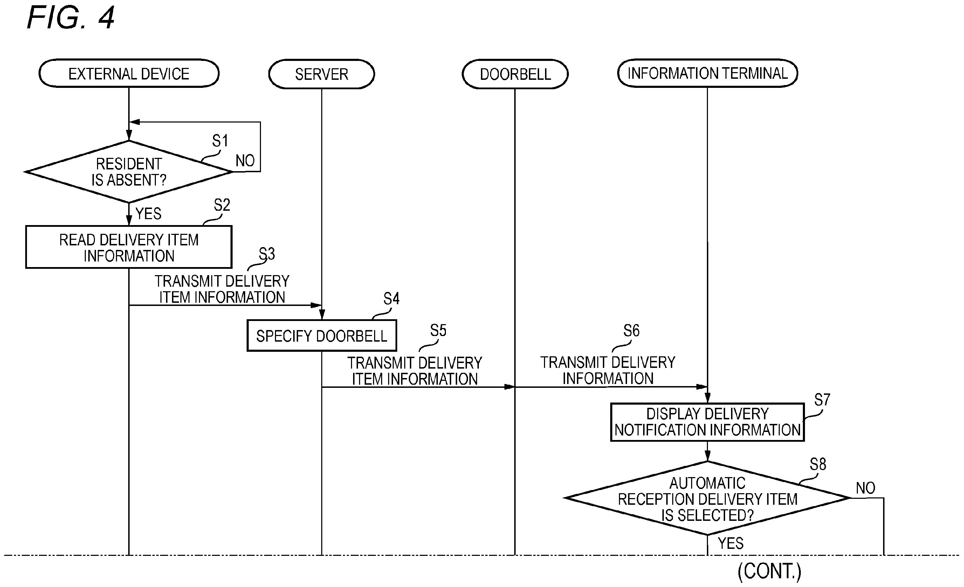

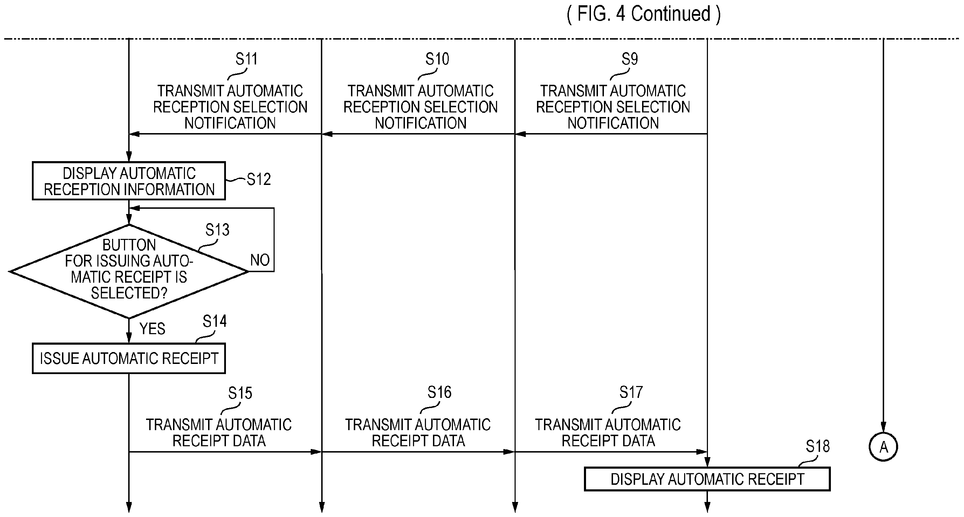

Subsequently, operations of an automatic reception function of a delivery item that is executed by the doorbell system 1 (specifically, the doorbell 2) are described with reference to FIGS. 4 to 6.

As shown in FIG. 4, a delivery person having arrived at a building in which the doorbell 2 is installed so as to deliver a delivery item determines whether a resident in the building (a customer in a delivery destination) is absent (step S1). When it is determined that the resident is absent, the delivery person reads out the delivery item information by using the external device 5 (step S2). Then, the delivery person transmits the delivery item information from the external device 5 to the server 4 (step S3). The control unit 42 of the server 4 having received the delivery item information compares the position information of the doorbell 2 stored in the storage unit 40 and the delivery destination information included in the delivery item information, and specifies the doorbell 2 to which the delivery item information is to be transmitted (step S4). That is, when the position information of the doorbell 2 matches an address of the delivery destination, the control unit 42 specifies the doorbell 2, as a doorbell to which the delivery item information is to be transmitted. Then, the control unit 42 transmits the delivery item information to the doorbell 2 specified in step S4 (step S5).

Then, the control unit 21 of the doorbell 2 transmits, based on the delivery item information acquired from the server 4, a delivery notification of the delivery item to the information terminal 3 associated with the resident of the building to which the doorbell 2 is attached (step S6).

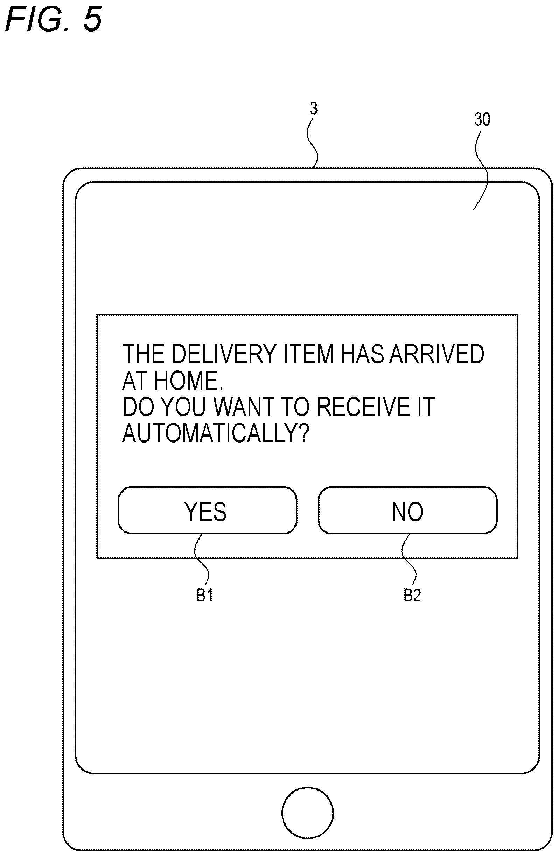

Then, the information terminal 3 displays, based on the received delivery notification, delivery notification information relating to the delivery item on the display unit 30 (step S7). The delivery notification information includes, for example, information indicating that a delivery item has arrived at home and information for causing a user (resident) of the information terminal 3 to select whether or not to automatically receive a delivery item, as shown in FIG. 5. Specifically, buttons B1 and B2 for selecting whether or not to automatically receive a delivery item are displayed on the display unit 30, together with a message "The delivery item has arrived at home. Do you want to receive it automatically?". The button B1 is a button for selecting to automatically receive a delivery item, and the button B2 is a button for selecting not to automatically receive a delivery item.

Then, the information terminal 3 determines whether the user has selected to receive the delivery item automatically (step S8). When it is determined in step S8 that the user has touched the button B1 (Yes in step S8), the information terminal 3 determines that the user has selected to automatically receive the delivery item, and transmits, to the doorbell 2, an automatic reception selection notification (an example of the reply notification) indicating that the user has selected to automatically receive the delivery item (step S9).

Then, the control unit 21 of the doorbell 2 transmits the received automatic reception selection notification to the server 4 (step S10) (an example of the automatic reception operation). The control unit 21 of the server 4 transmits the received automatic reception selection notification to the external device 5 having transmitted the delivery item information (step S11).

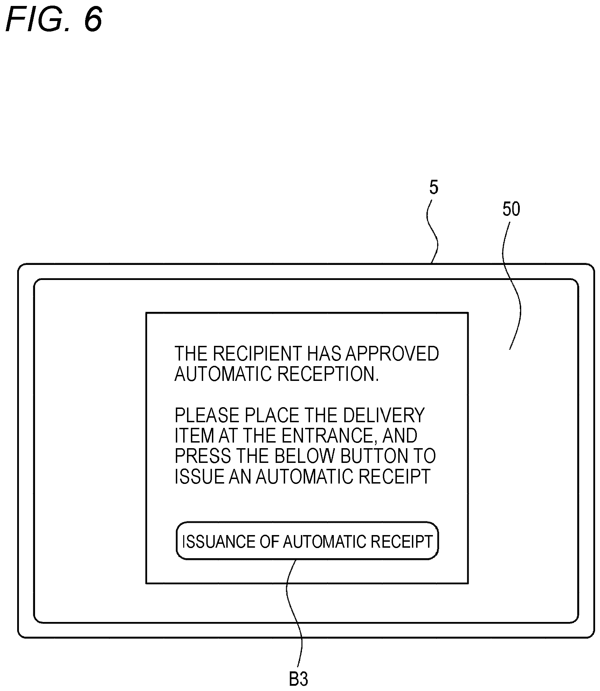

Then, the external device 5 generates automatic reception information, based on the received automatic reception selection notification, and displays the automatic reception information on the display unit 50 (step S12). As shown in FIG. 6, the automatic reception information includes information indicating that a recipient (resident) has approved automatic reception and information about processing for issuing an automatic receipt, for example. Specifically, a message "The recipient has approved automatic reception. Please place the delivery item at the entrance, and press the below button to issue an automatic receipt." and a button B3 "Issue an automatic receipt" are displayed on the display unit 50. The delivery person who has checked the display places the delivery item at the entrance, and proceeds to a next step (step S13). As such, the service of placing a parcel at the entrance or in the delivery box designated in advance by a customer (a resident or the like) of a delivery destination and completing the delivery when the customer is absent upon delivery is called as "safe drop". The place at which the delivery item is placed can be arbitrarily designated by the resident (user).

Then, the external device 5 determines whether the delivery person has selected the button B3 "Issue an automatic receipt" (step S13). When it is determined in step S13 that the button B3 has been selected (Yes in step S13), the external device 5 issues an automatic receipt (step S14). Then, the external device 5 transmits automatic receipt data to the server 4 (step S15). In the meantime, the automatic receipt may be issued as a paper certificate from the external device 5 and may be attached to the safely dropped delivery item.

Then, the control unit 21 of the server 4 transmits the received automatic receipt data to the doorbell 2 (step S16). Then, the doorbell 2 transmits the received automatic receipt data to the information terminal 3 (step S17). Then, the information terminal 3 displays the automatic receipt on the display unit 30, based on the received automatic receipt data (step S18). As such, the operations of the automatic reception function (safe drop processing) of the delivery item are completed.

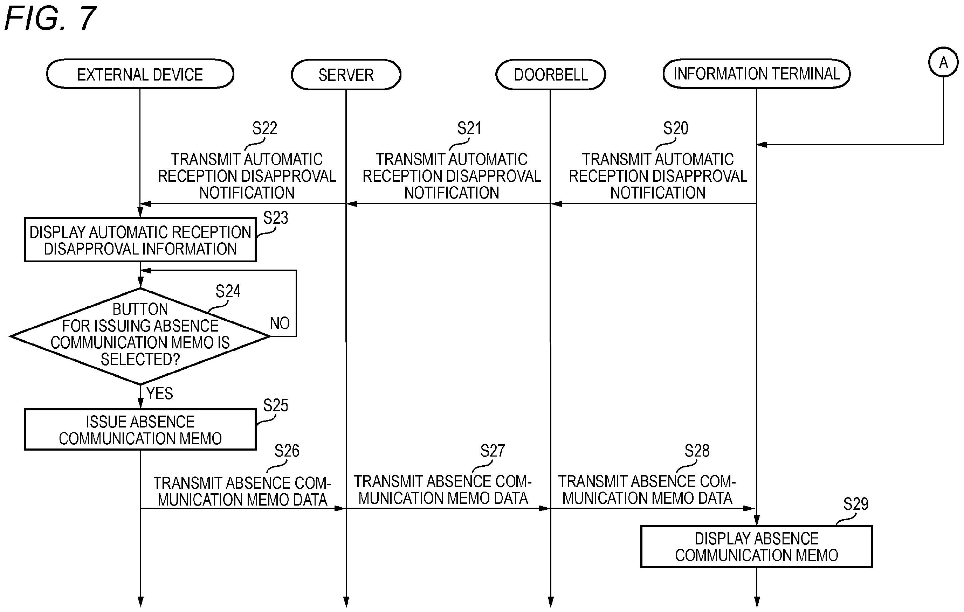

On the other hand, as shown in FIG. 7, when it is determined in step S8 that the user has touched the button B2 (No in step S8), the information terminal 3 determines that the user has selected not to automatically receive the delivery item, and transmits an automatic reception disapproval notification, which indicates that the user has selected not to automatically receive the delivery item, to the doorbell 2 (step S20).

Then, the control unit 21 of the doorbell 2 transmits the received automatic reception disapproval notification to the server 4 (step S21). The control unit 42 of the server 4 transmits the received automatic reception disapproval notification to the external device 5 having transmitted the delivery item information (step S22).

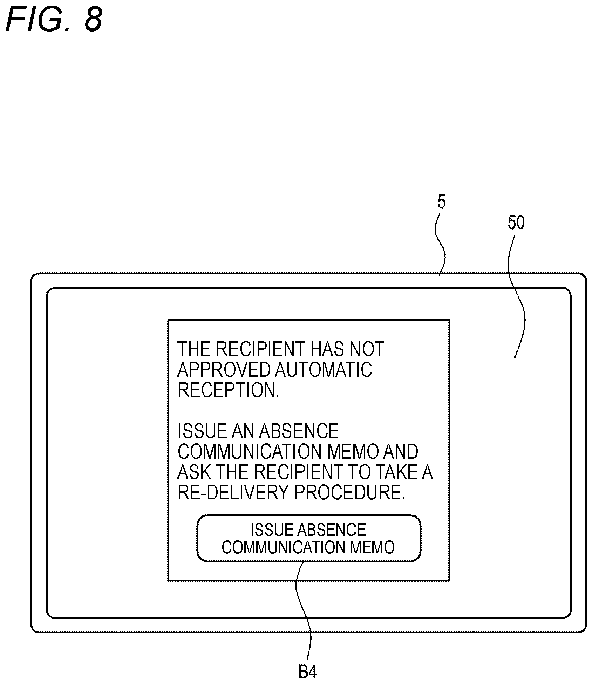

Then, the external device 5 generates automatic reception disapproval information, based on the received automatic reception disapproval notification, and displays the automatic reception disapproval information on the display unit 50 (step S23). As shown in FIG. 8, the automatic reception disapproval information includes information indicating that a recipient (resident) has not approved automatic reception and information indicating that it is necessary to perform a re-delivery procedure of the delivery item, for example. Specifically, a message "The recipient has not approved automatic reception. Issue an absence communication memo and, ask the recipient to take a re-delivery procedure." and a button B4 "Issue an absence communication memo" are displayed on the display unit 50.

Then, the external device 5 determines whether the delivery person has selected the button B4 "Issue an absence communication memo" (step S24). When it is determined in step S24 that the button B4 has been selected (Yes in step S24), the external device 5 issues an absence communication memo (step S25). Then, the external device 5 transmits the absence communication memo data to the server 4 (step S26). In the meantime, the absence communication memo may be issued as a paper memo from the external device 5 and may be put into a mailbox of a house, for example.

Then, the control unit 42 of the server 4 transmits the received absence communication memo data to the doorbell 2 (step S27). Then, the doorbell 2 transmits the received absence communication memo data to the information terminal 3 (step S28). Then, the information terminal 3 displays the absence communication memo on the display unit 30, based on the received absence communication memo data (step S29). Thereby, the re-delivery processing of the delivery item is completed.

As described above, the doorbell 2 of the present embodiment includes the operation unit 22 capable of performing a calling operation, the camera 26, the microphone 23, the speaker 24, and the control unit 21 capable of performing direct or indirect communication with the external device 5 in which the delivery item information relating to the delivery item is recorded. The control unit 21 is configured to acquire the delivery item information from the external device 5, and to transmit, based on the delivery item information, the delivery notification of the delivery item to the information terminal 3 associated with the resident of the house in which the doorbell 2 is attached. As such, the delivery notification of the delivery item transmitted from the external device 5 is informed to the information terminal 3 of the resident via the doorbell 2, so that the resident can easily perceive the delivery item information.

Also, the control unit 21 of the doorbell 2 is configured to receive the reply notification from the information terminal 3 having received the delivery notification, and to perform the automatic reception operation for automatically receiving the delivery item, based on the reply notification. Specifically, when it is determined that the user has selected to automatically receive the delivery item, the doorbell 2 transmits the automatic reception selection notification (an example of the reply notification) received from the information terminal 3 to the external device 5 via the server 4. The delivery person who carries the external device 5 having received the automatic reception selection notification checks the automatic reception information displayed on the display unit 50, and performs the procedure of issuing the automatic receipt, together with the safe drop of the delivery item. By adopting the above method, it is possible to easily perform the safe drop processing by using the doorbell 2 when the customer (a resident and the like) of the delivery destination is absent, and to reduce man-hour and cost relating to the re-delivery of the delivery item.

Also, the doorbell 2 transmits the automatic reception selection notification to the external device 5, as the automatic reception operation of the delivery item, so that the delivery person can easily perceive that the resident wants automatic reception (safe drop). Also, the delivery person can acquire and issue the automatic receipt, as a certificate of delivery completion.

In the meantime, the automatic reception operation of the delivery item may be performed using the speaker 24 of the doorbell 2. Specifically, the control unit 21 of the doorbell 2 may output a voice guide "The recipient has approved automatic reception. Please place the delivery item at the entrance, and press the below button to issue an automatic receipt." from the speaker 24. Thereby, the delivery person who hears the voice guide from the speaker 24 can smoothly perform the safe drop processing and the automatic receipt issuance.

### (Description of Delivery Item Monitoring Function)

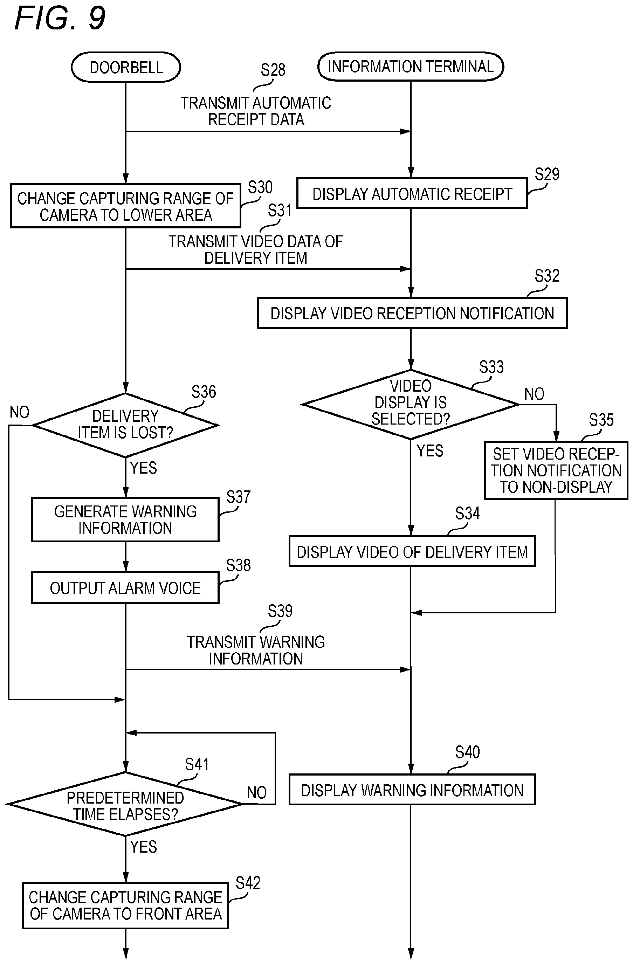

Subsequently, operations of a delivery item monitoring function that is executed by the doorbell system 1 are described with reference to FIGS. 9 to 11.

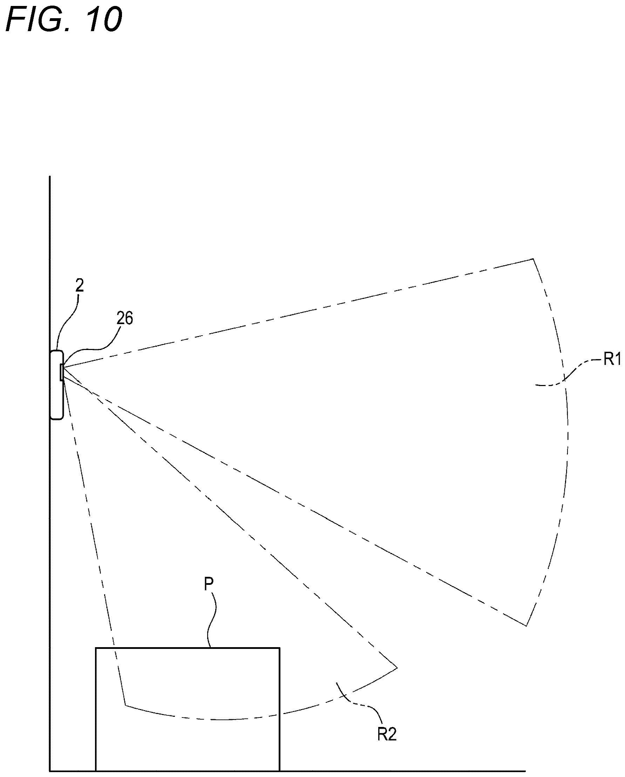

As shown in FIG. 9, the control unit 21 of the doorbell 2 having received the automatic receipt data determines that the delivery item has been safely dropped, and changes the capturing range of the camera 26 (step S30). Specifically, as shown in FIG. 10, the control unit 21 changes the capturing range of the camera 26 from a front area R1 of the doorbell 2 to a downward lower area R2. Thereby, a delivery item P safely dropped at the entrance can be included in the capturing range of the camera 26. Then, the control unit 21 transmits video data by the camera 26 of which the capturing range has been changed (video data in which the delivery item P is included in a video) to the information terminal 3 (step S31).

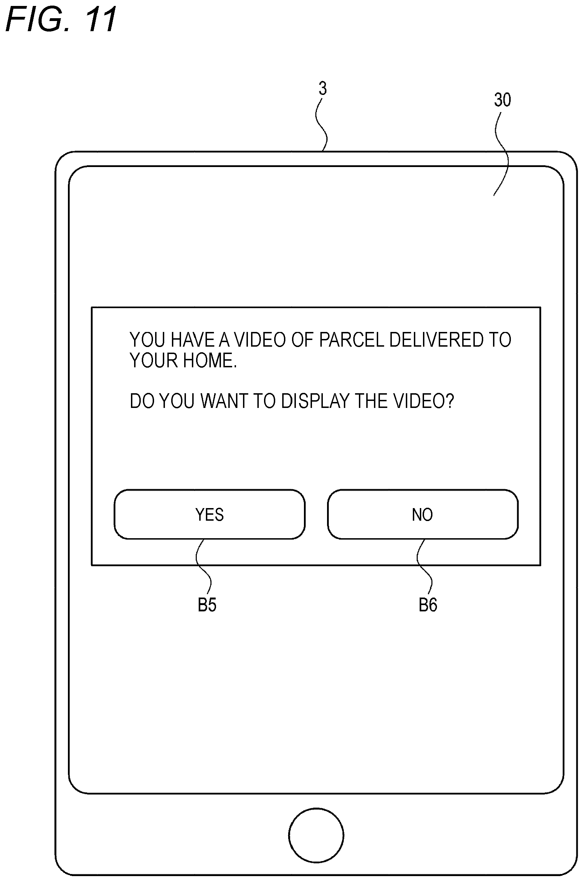

Then, the information terminal 3 having received the video data from the doorbell 2 displays, on the display unit 30, a video reception notification for notifying that the video of the delivery item P has been received (step S32). Specifically, as shown in FIG. 11, a message "You have a video of parcel delivered to your home. Do you want to display the video?" and buttons B5 and B6 that allow a user to input whether or not to display a captured image (video) of the delivery item P are displayed. The button B5 is a button for selecting to display the video of the delivery item P, and the button B6 is a button for selecting not to display the video of the delivery item P.

Then, the information terminal 3 determines whether the user has selected to display the video of the delivery item P (step S33). When it is determined in step S33 that the user has touched the button B5 (Yes in step S33), the information terminal 3 determines that the display of the video of the delivery item P has been selected, and displays the video of the delivery item P on the display unit 30, based on the video data transmitted from the doorbell 2 (step S34). On the other hand, when it is determined that the user has touched the button B6 (No in step S33), the information terminal 3 determines that the display of the video of the delivery item P has not been selected, and sets the video reception notification shown in FIG. 11 to a non-display state (step S35).

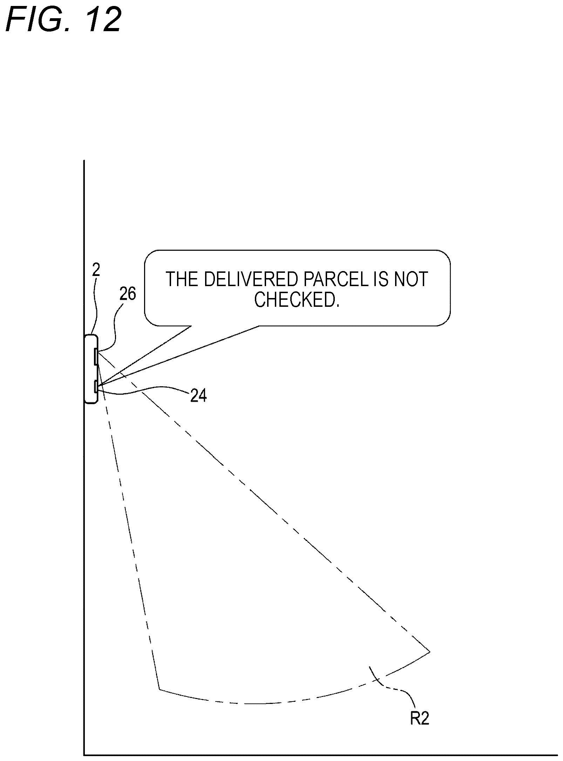

In the meantime, in the state where the capturing range of the camera 26 is changed to the lower area R2 in step S30, the control unit 21 of the doorbell 2 analyzes the video data of the delivery item P that is captured by the camera 26, and determines whether the delivery item P has disappeared from the video data (step S36). When it is determined in step S36 that the delivery item P has disappeared from the video (Yes in step S36), the control unit 21 generates warning information for warning that the delivery item P has disappeared (step S37). Then, the control unit 21 outputs an alarm voice, which indicates that the delivery item P is not included in the video, from the speaker 24, based on the warning information (step S38). Specifically, as shown in FIG. 12, the alarm voice "It is not possible to check the delivered parcel." is output from the speaker 24. Then, the control unit 21 transmits the warning information to the information terminal 3 (step S39).

Then, the information terminal 3 displays the warning information received from the doorbell 2 on the display unit 30 (step S40). Thereby, the user of the information terminal 3 can recognize that the delivery item P has disappeared.

In the meantime, after transmitting the warning information to the information terminal 3 in step S39, the control unit 21 of the doorbell 2 determines whether a predetermined time has elapsed since the camera 26 has started the capturing of the delivery item P (step S41). When it is determined in step S41 that the predetermined time has elapsed (Yes in step S41), the control unit 21 changes the capturing range of the camera 26 (step S42). Specifically, the control unit 21 returns the capturing range of the camera 26 from the lower area R2 to the front area R1 of the initial state.

Also, when it is determined in step S36 that the delivery item P has not disappeared from the video that is captured by the camera 26 (No in step S36), the control unit 21 of the doorbell 2 determines whether a predetermined time has elapsed since the camera 26 has started the capturing of the delivery item P (step S41). When it is determined in step S41 that the predetermined time has elapsed (Yes in step S41), the control unit 21 changes the capturing range of the camera 26 from the lower area R2 to the front area R1 of the initial state (step S42). As such, the operations of the monitoring function of the delivery item P are completed.

As described above, the doorbell 2 of the present embodiment includes the operation unit 22 capable of performing a calling operation, the camera 26, the microphone 23, the speaker 24, and the control unit 21 capable of performing indirect communication with the external device 5 in which the delivery item information relating to the delivery item P is recorded, via the server 4. The control unit 21 is configured to change the capturing range of the camera 26, based on the delivery item information. Thereby, for example, when the delivery item P is placed at the entrance, the capturing range of the camera 26 is changed to the range (for example, the lower area R2) in which the delivery item P can be captured, so that it is possible to watch the delivery item P.

Also, the capturing range of the camera 26 is configured to include the vicinity of the lower part of the doorbell 2 within a predetermined time from a delivery time of the delivery item P, and to include the front part of the doorbell 2 after the predetermined time elapses since the delivery time. The capturing range is preferably changed between the front area R1 of the initial state and the lower area R2, as described above.

Also, the control unit 21 is configured to transmit, based on the delivery item information, the image of the delivery item P captured by the camera 26 within the predetermined time from the delivery time of the delivery item P to the information terminal 3 associated with the doorbell 2. Thereby, for example, the user of the information terminal 3 who is a resident of the house in which the doorbell 2 is installed can easily watch the delivery item P.

Also, when it is determined that the delivery item P has disappeared from the image, the control unit 21 transmits the alarm (warning information), which indicates that the delivery item P is not included in the image, to the information terminal 3. Thereby, the resident can rapidly recognize that the delivery item P has been stolen or lost.

Also, when it is determined that the delivery item P has disappeared from the image, the control unit 21 outputs the alarm voice, which indicates that the delivery item P is not included in the image, from the speaker 24. As such, the alarm, which indicates that the delivery item P has disappeared from the captured image of the camera 26, is notified from the doorbell 2, so that it is possible to issue a warning of theft or loss around the doorbell 2, which is helpful to prevent theft, and the like.

In the first embodiment, the doorbell 2 is configured to perform indirect communication with the external device 5 via the server 4. However, the present invention is not limited thereto. For example, the doorbell 2 may also be configured to perform direct communication with the external device 5 carried by the delivery person, via the IF 29 and the network N.

In the doorbell system 1 of the first embodiment, the information terminal 3 associated with the resident is exemplified as the external device, and the doorbell 2 is configured as the Wi-Fi doorbell capable of performing wireless communication with the information terminal 3. However, the present invention is not limited thereto. For example, as the external device, a living room mater unit provided in a living room of the house in which the doorbell 2 is installed may be included. That is, the doorbell 2 may also be configured as a doorbell capable of performing communication with the living room mater unit via an intercom line, for example.

### (Second Embodiment)

Hereinbelow, an example of a second embodiment of the present invention is described with reference to the drawings.

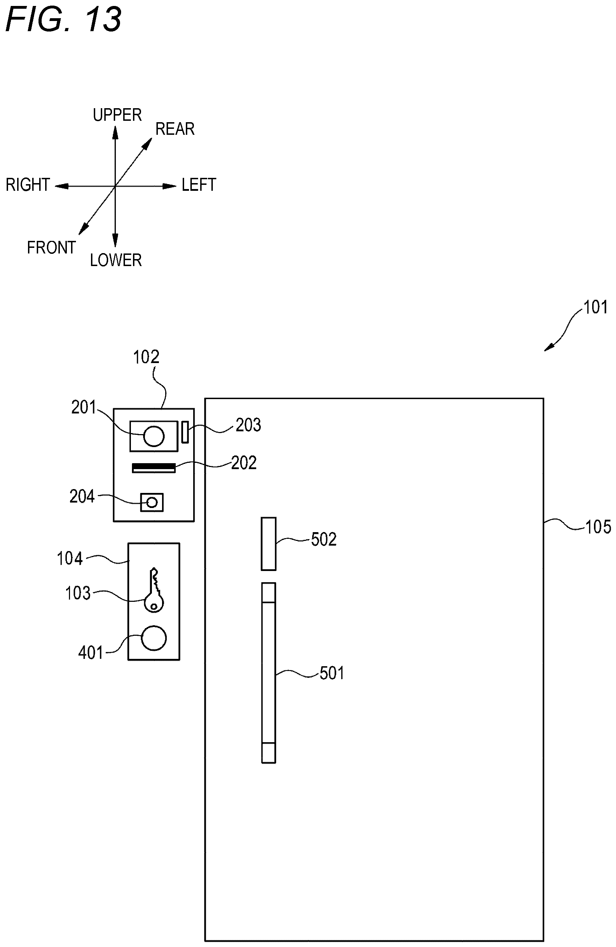

Also, a "right and left direction", a "front and rear direction", and a "vertical direction" are referred to as appropriate in the descriptions of the present embodiment for sake of convenience. The directions are relative directions set with respect to a key management system 101 shown in FIG. 13. Herein, the "vertical direction" is a direction including an "upper direction" and a "lower direction". The "front and rear direction" is a direction including a "front direction" and a "rear direction". The "right and left direction" is a direction including a "left direction" and a "right direction".

FIG. 13 depicts a key management system 101 in accordance with a second embodiment of the present invention. As shown in FIG. 13, the key management system 101 includes a doorbell 102, a key 103, a key box 104, and an entrance door 105.

The doorbell 102 is substantially cuboid. A camera 201 is disposed at an upper part of the doorbell 102. A microphone 202 is provided at a substantially central part of the doorbell 102. A speaker 203 is provided at a left upper part of the doorbell 102.

The key 103 is to open the entrance door 105 of a residence. The key 103 is normally kept in the key box 104. When the key 103 is kept in the key box 104, the key box 104 is in a closed state.

The key box 104 is substantially cuboid. A forward surface of the key box 104 is provided with an openable/closable cover. The key box 104 has a space therein. The key 103 can be kept in the space. A camera 401 is provided at a lower part of the key box 104.

The entrance door 105 is substantially cuboid. The entrance door 105 has a doorknob 501, and an opening/closing sensor 502. In the example of FIG. 13, the doorknob 501 is disposed at a substantially central part on the right side of the entrance door 105, and the opening/closing sensor 502 is disposed above the doorknob 501.

In the embodiment shown in FIG. 13, the doorbell 102 and the key box 104 are disposed on the right side of the entrance door 105 of the residence. The doorbell 102 is disposed above the key box 104. However, the positions of the doorbell 102, the key box 104 and the entrance door 105 are not limited thereto.

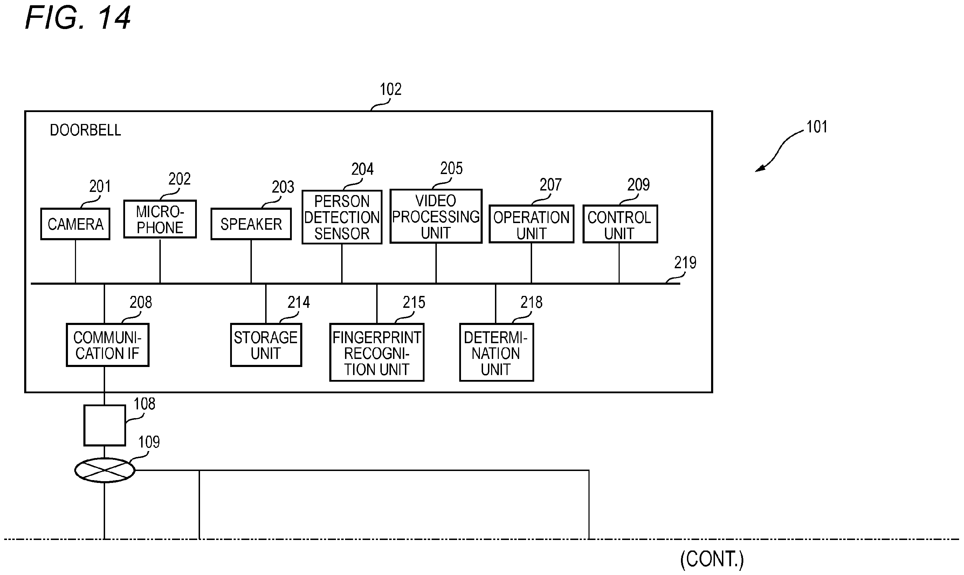

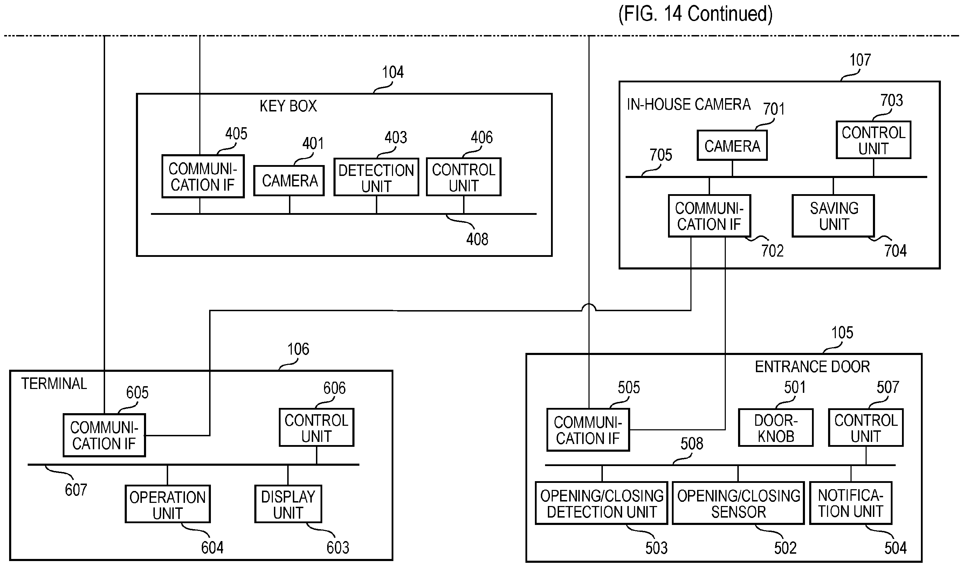

FIG. 14 is a functional block diagram of the key management system 101. The key management system 101 of the present example includes the doorbell 102, the key box 104, a terminal 106, the entrance door 105, and an in-house camera 107. As shown in FIG. 14, the doorbell 102 includes a camera 201, a microphone 202, a speaker 203, a person detection sensor 204, a video processing unit 205, an operation unit 207, a communication IF (interface) 208, a control unit 209, a storage unit 214, a fingerprint recognition unit 215, a determination unit 218, and a GPS (Global Positioning System) (not shown), which are communicatively connected to each other via a bus 219.

The camera 201 is configured to capture a surrounding including the front of the doorbell 102. When a visitor exists in a capturing range of the camera 201, the camera 201 captures the visitor. Also, the camera 201 has an OCR function, and can read a two-dimensional code. The microphone 202 is configured to capture a voice such as a voice of a visitor around the doorbell 102, for example. The speaker 203 is configured to output a voice such as a voice of a resident captured by a terminal of the resident (also referred to as a user), for example, a microphone of an intercom master unit.

Also, the camera 201 can function as a camera for face capturing. In this case, the camera 201 is configured to capture a face of a visitor. Image data captured by the camera 201 is transmitted to the video processing unit 205.

The person detection sensor 204 is configured to detect a visitor by infrared ray or the like. When the person detection sensor 204 detects a visitor, the person detection sensor 204 notifies the control unit 209 that the visitor is approaching the doorbell 102.

The control unit 209 is a control unit for controlling operations of each unit of the doorbell 102, and may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit).

The control unit 209 controls the camera 201 to start capturing when a capturing start signal, which will be described later, is received from the key box 104. Also, the control unit 209 controls the camera 201 to start capturing when a visitor comes and is detected by the person detection sensor 204 or when a visitor calls a user via the operation unit 207.

The video processing unit 205 may be configured by a processor that is similar to the processor of the control unit 209. The video processing unit 205 has software for analyzing an image such as a photograph. The video processing unit 205 is configured to process an image and the like captured by the camera 201 and to generate a signal. The video processing unit 205 is configured to extract and signalize features such as a contour, hairs, eyebrows, eyes, nostrils, lips, ears, scars and moles of a human face from the image showing the human face, for example. Also, the video processing unit 205 is configured to extract and signalize features of a fingerprint such as a shape from an image showing a human fingerprint, for example. The generated signal is transmitted to the determination unit 218.

The operation unit 207 is configured to receive a variety of input operations of the visitor. The diverse input operations include a calling to a user, a password input for releasing a closed state of the key box 104, and the like. The operation unit 207 is configured to generate a variety of signals, based on the received diverse input operations, and to transmit the same to the control unit 209. For example, the operation unit 207 may be configured by a ten key pad and the like. When a visitor inputs a password for releasing a closed state of the key box 104 to the operation unit 207, the input password information is transmitted to the control unit 406 of the key box 104, as a signal.

The communication IF 208 is a device or an interface enabling connection to the network 109 via a router 108. The doorbell 102 can appropriately perform communication with the key box 104, terminal 106 and entrance door 105 connected to the network 109, via the communication IF 208 and the router 108. The router 108 is, for example, a mobile router.

The storage unit 214 has a storage area in which data relating to human faces and data relating to human fingerprints can be stored. The storage unit 214 stores therein person image data, fingerprint image data, and the like, for example.

The fingerprint recognition unit 215 has a sensor capable of reading fingerprints. The sensor has a protective film. Below the protective film, many electrodes are disposed. When a visitor touches the fingerprint recognition unit 215 with a finger, the fingerprint recognition unit 215 recognizes a change in charges of the electrodes. The fingerprint recognition unit 215 is configured to convert an amount of charges determined by a distance between a fingerprint of the visitor and the electrodes into image data. The image data is transmitted to the determination unit 218.

The determination unit 218 is configured to compare the fingerprint-related data transmitted from the fingerprint recognition unit 215 or the data transmitted from the video processing unit 205 and the data stored in the storage unit 214, and to calculate coincidence points and difference points. When the coincidence points are more than a predetermined value, the determination unit 218 determines that the visitor is a person associated with the data stored in the storage unit 214.

As shown in FIG. 14, the key box 104 includes the camera 401, a detection unit 403, a communication IF (interface) 405, and a control unit 406, which are communicatively connected to each other via a bus 408.

The camera 401 is configured to capture a surrounding including the front of the key box 104. When a visitor exists in a capturing range of the camera 401, the camera 401 captures the visitor. The camera 401 starts capturing of the visitor around the key box 104 when a capturing start signal is received from the control unit 406. Also, the camera 401 has an OCR function, and can read a two-dimensional code.

The detection unit 403 has a sensor configured to detect the key 103 kept in the key box 104. As the sensor, for example, an optical sensor, an infrared sensor and the like may be used. The detection unit 403 can monitor all the time whether the key 103 is kept in the key box 104 by the sensor. When the key 103 is kept in the key box 104, the detection unit 403 continues to transmit a signal (signal A), which indicates that the key 103 is kept in the key box 104, to the control unit 406. On the other hand, when the key 103 is not kept in the key box 104, the detection unit 403 continues to transmit a signal (signal B), which indicates that the key 103 is not kept in the key box 104, to the control unit 406.

When the closed state of the key box 104 is released, the detection unit 403 transmits a signal, which indicates that the closed state of the key box 104 is released, to the terminal 106.

The communication IF 405 is a device or an interface enabling connection to the network 109. The key box 104 can perform appropriately communication with the doorbell 102, terminal 106 and entrance door 105 connected to network 109, via the communication IF 405.

The control unit 406 is a control unit for controlling operations of each unit of the key box 104, and may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit).

The control unit 406 can recognize the password information from the signal relating to the password information transmitted from the doorbell 102. When the password information matches preset password information for releasing the closed state of the key box 104, the control unit 406 controls to release the closed state of the key box 104. On the other hand, when the password information does not match, the closed state of the key box 104 is held. In the meantime, the preset password may also be a so-called one-time password. In this case, the control unit 406 re-sets the password to another password when a predetermined time elapses.

When the closed state of the key box 104 is released, the control unit 406 transmits a capturing start signal to the doorbell 102.

When the control unit 406 receives the signal A for the first time after receiving the signal B from the detection unit 403, the control unit 406 generates a capturing start signal and transmits the same to the camera 401 and the control unit 209. Also, when the control unit 406 receives the signal A for the first time after receiving the signal B from the detection unit 403, the control unit 406 controls to lock the cover of the key box 104 at the time when the cover of the key box 104 is closed.

As shown in FIG. 14, the terminal 106 includes a display unit 603, an operation unit 604, a communication IF (interface) 605, and a control unit 606, which are communicatively connected to each other via a bus 607.

The display unit 603 is a display such as a liquid crystal monitor, an organic EL display and the like, and can display operation images, diverse application images, and the like.

The operation unit 604 is configured to receive an input operation of a user who operates the terminal 106. The operation unit 604 is a touch display disposed with being superimposed on the display unit 603, an operation button provided separately from the display unit 603, and the like, for example. The operation unit 604 is configured to generate diverse signals, based on the received diverse input operations, and to transmit the same to the control unit 606. The input operations include, for example, a browse request operation for image data captured by the in-house camera 107.

The communication IF 605 is communicatively connected to the doorbell 102, the key box 104, the entrance door 105 and the in-house camera 107, via the network 109.

The control unit 606 is a control unit for controlling operations of each unit of the terminal 106, and may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit).

As shown in FIG. 14, the entrance door 105 includes a doorknob 501, an opening/closing sensor 502, an opening/closing detection unit 503, a notification unit 504, a communication IF (interface) 505, and a control unit 507. The opening/closing sensor 502, the opening/closing detection unit 503, the notification unit 504, the communication IF 505 and the control unit 507 are communicatively connected to each other via a bus 508.

The opening/closing detection unit 503 has a sensor. The sensor is, for example, an optical sensor, an infrared sensor and the like. The opening/closing detection unit 503 can detect opening/closing of the entrance door 105 of the residence by the sensor. When the opening/closing detection unit 503 detects that the entrance door 105 is opened, the opening/closing detection unit 503 transmits a signal, which indicates that the entrance door 105 is opened, to the notification unit 504.

When the notification unit 504 receives the signal, which indicates that the entrance door 105 is opened, from the opening/closing detection unit 503, the notification unit 504 transmits the signal, which indicates that the entrance door 105 is opened, to the terminal 106 and the in-house camera 107 via the network 109.

The communication IF 505 is a device or an interface enabling connection to the network 109. The entrance door 105 can perform appropriately communication with the doorbell 102, key box 104 and terminal 106 connected to the network 109, via the communication IF 505.

Also, the communication IF 505 is a device or an interface enabling connection to the in-house camera 107. The entrance door 105 can perform appropriately communication with the in-house camera 107 via the communication IF 505.

The control unit 507 is a control unit for controlling operations of each unit of the entrance door 105, and may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit).

As shown in FIG. 14, the in-house camera 107 includes a camera 701, a communication IF (interface) 702, a control unit 703, and a saving unit 704, which are communicatively connected to each other via a bus 705. The in-house camera 107 is a camera that is installed in a residence, for example. The in-house camera 107 is installed near an entrance of the residence, for example.

The camera 701 is configured to capture an inside of the residence, for example, a vicinity of the entrance.

The communication IF 702 is a device or an interface enabling connection to the in-terminal 106. The in-house camera 107 can perform appropriately communication with the entrance door 105 and the terminal 106 via the communication IF 702.

The control unit 703 is a control unit for controlling operations of each unit of the in-house camera 107, and may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit). When the control unit 703 receives a signal, which indicates that the entrance door 105 is opened, for example, the control unit 703 controls the camera 701 to start capturing. Also, the control unit 703 controls the camera 701 to transmit the captured image data to the saving unit 704.

The saving unit 704 has a storage area in which the image data captured by the camera 701 can be saved.

### <First Operation Example>

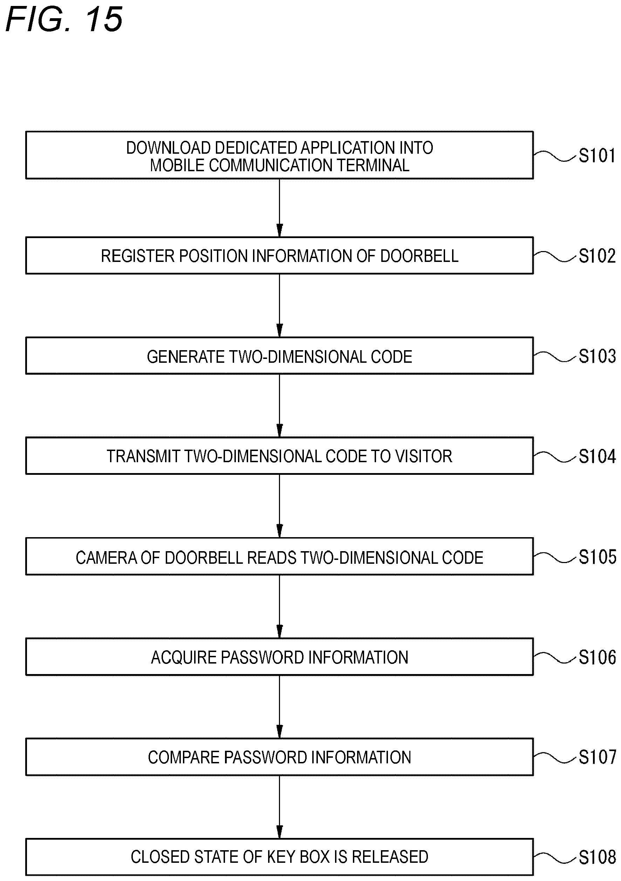

Subsequently, in the key management system 101 where authentication by a two-dimensional code is used, a flow until the closed state of the key box 104 is released is described with reference to FIG. 15. FIG. 15 is a flowchart depicting a flow until the closed state of the key box 104 is released, in the key management system 101 where authentication by a two-dimensional code is used.

A user of the doorbell 102 downloads a dedicated application for password generation into the terminal 106 carried by the user (step S101). The application is saved in a server (not shown) that can connect to the terminal 106 via the network. The user can download the application saved in the server by causing the terminal 106 to connect to the server via the network.

The user activates the application, and registers the information about the doorbell 102 and user of the doorbell 102 (for example, position information of the doorbell 102) (step S102). The position information of the doorbell 102 is, for example, an address of the user for registration as the position information of the doorbell 102 or position information acquired by the GPS of the terminal 106.

When the position information of the doorbell 102 is registered, two-dimensional code information having password information embedded therein for releasing the closed state of the key box 104 is generated based on the input information by the application (step S103). In the meantime, the password may also be a so-called one-time password. In this case, the password is invalidated when a predetermined time elapses.

The user transmits the two-dimensional code from the terminal 106 to a terminal of a visitor, for example, a smartphone (step S104).

When a visitor arrives at the residence, the visitor holds the two-dimensional code transmitted from the user over the camera 201. The camera 201 reads the two-dimensional code (step S105).

The two-dimensional code information read by the camera 201 is transmitted to the video processing unit 205. The video processing unit 205 analyzes the two-dimensional code information to acquire the embedded password information (step S106). The password information is transmitted to the control unit 406 of the key box 104. The control unit 406 compares the received password information and a preset password for releasing the closed state of the key box 104 (step S107).

When the received password information matches the preset password, the control unit 406 controls to release the closed state of the key box 104 (step S108).

On the other hand, when the received password information does not match the preset password, the control unit 406 controls to keep the closed state of the key box 104. At this time, the control unit 406 may control the speaker 203 to output an error message "The checking has failed."

### <Second Operation Example>

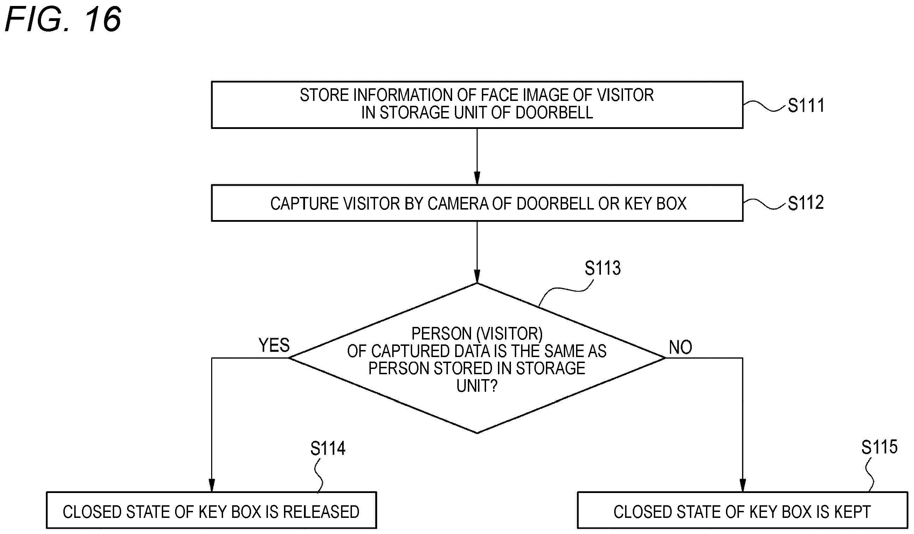

Subsequently, in the key management system 101 where face recognition is used, a flow until the closed state of the key box 104 is released is described with reference to FIG. 16. FIG. 16 is a flowchart depicting a flow until the closed state of the key box 104 is released, in the key management system 101 where face recognition is used.

A user of the doorbell 102 stores information such as a face image of a visitor and the like in advance in the storage unit 214 (step Sill). As used herein, the face image is, for example, JPEG photograph data. The user stores information about a face image of a visitor in the storage unit 214 by transmitting photograph data to the doorbell 102 or causing the camera 201 to capture a face.

When a visitor arrives at the residence, the camera 201 captures a face of the visitor (step S112). The data captured by the camera 201 is transmitted to the video processing unit 205. The video processing unit 205 extracts features such as a contour, hairs, eyebrows, eyes, nostrils, lips, ears, scars and moles of a human face from the captured data, and generates a signal. The video processing unit 205 transmits the signal to the determination unit 218.

The determination unit 218 compares the received captured data and the face information stored in the storage unit 214 and determines whether or not a same person (step S113). The determination unit 218 compares the data transmitted from the video processing unit 205 and the data stored in the storage unit 214, and calculates coincidence points and difference points. When the coincidence points are more than a predetermined value, the determination unit 218 determines that the visitor is a person associated with the data stored in the storage unit 214 (YES in step S113). In this case, the determination unit 218 transmits a checking success signal to the control unit 406 of the key box 104. The control unit 406 controls to release the closed state of the key box 104 (step S114). On the other hand, when the determination unit 218 determines that the visitor is not associated with any data stored in the storage unit 214, the determination unit 218 does not transmit any signal to the control unit 406 (NO in step S113). For this reason, the closed state of the key box 104 is kept (step S115).

### <Third Operation Example>

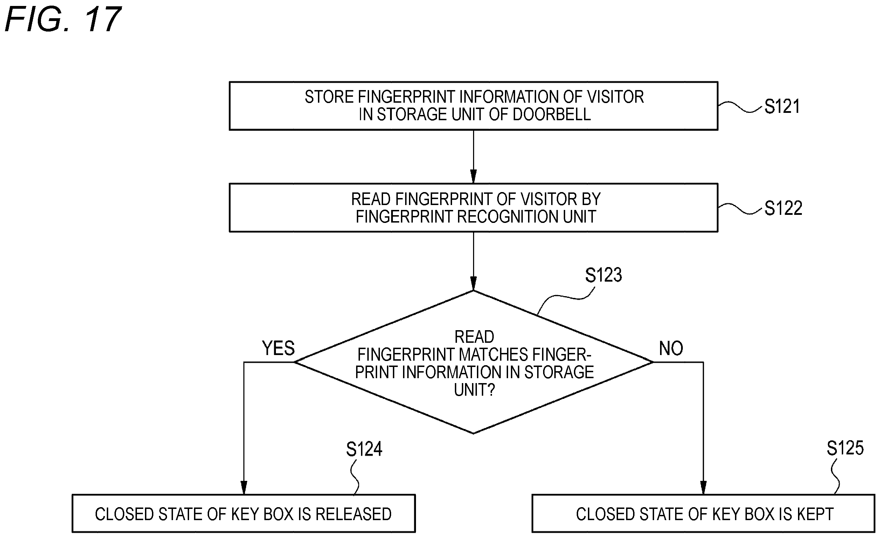

Subsequently, in the key management system 101 where fingerprint authentication is used, a flow until the closed state of the key box 104 is released is described with reference to FIG. 17. FIG. 17 is a flowchart depicting a flow until the closed state of the key box 104 is released, in the key management system 101 where fingerprint authentication is used.

A user of the doorbell 102 stores fingerprint information of a visitor in advance in the storage unit 214 (step S121). The user stores fingerprint information of a visitor in the storage unit 214 by transmitting fingerprint image data of the visitor to the doorbell 102 or causing the camera 201 to capture a fingerprint image of the visitor, for example.

When a visitor arrives at the residence, the visitor touches the fingerprint recognition unit 215 with a finger. Then, the fingerprint recognition unit 215 reads a fingerprint of the finger of the visitor (step S122). The fingerprint recognition unit 215 generates fingerprint-related data (fingerprint information) of the visitor from a change in charges of the electrodes, and transmits the same to the determination unit 218.

The determination unit 218 compares the received fingerprint information and the fingerprint information stored in the storage unit 214, calculates coincidence points and difference points, and determines whether the read fingerprint matches the fingerprint information stored in the storage unit 214 (step S213). When the coincidence points are more than a predetermined value, the determination unit 218 determines that the fingerprint information of the visitor matches the fingerprint information stored in the storage unit 214 (YES in step S123). In this case, the determination unit 218 transmits a checking success signal to the control unit 406 of the key box 104. The control unit 406 controls to release the closed state of the key box 104 (step S124). On the other hand, when the determination unit 218 determines that the fingerprint information of the visitor does not match the fingerprint information stored in the storage unit 214 (NO in step S123), the determination unit 218 does not transmit any signal to the control unit 406. For this reason, the closed state of the key box 104 is kept (step S125).

### <Fourth Operation Example>

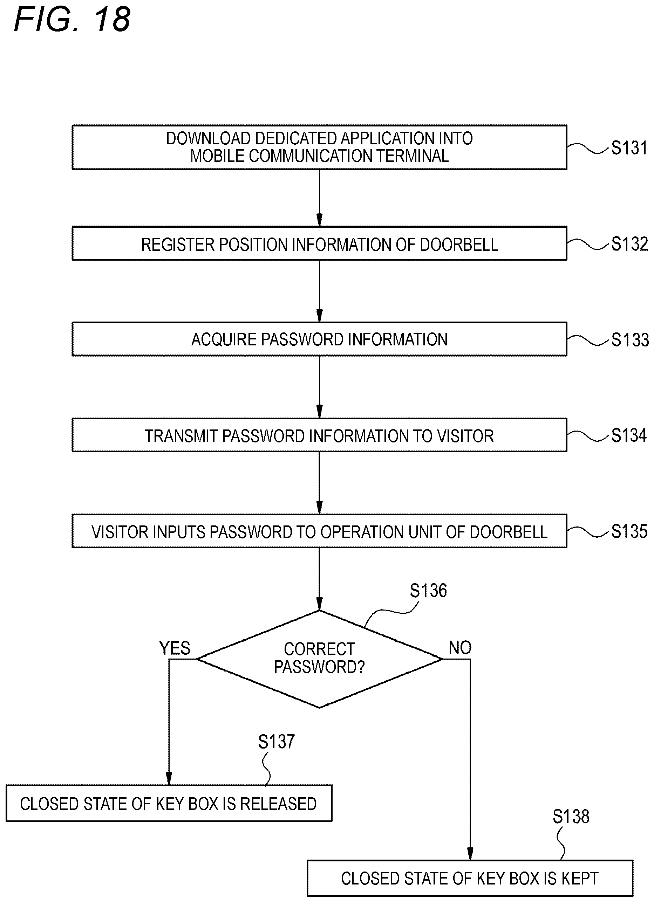

Subsequently, in the key management system 101 where a password is input, a flow until the closed state of the key box 104 is released is described with reference to FIG. 18. FIG. 18 is a flowchart depicting a flow until the closed state of the key box 104 is released, in the key management system 101 where a password is input.

A user of the doorbell 102 downloads a dedicated application for password generation into the terminal 106 carried by the user (step S131). The application is saved in a server (not shown) that can connect to the terminal 106 via the network. The user can download the application saved in the server by causing the terminal 106 to connect to the server via the network.

The user activates the application, and registers information about the doorbell 102 and user of the doorbell 102 (for example, position information of the doorbell 102) (step S132). The position information of the doorbell 102 is, for example, an address of the user for registration as the position information of the doorbell 102 or position information acquired by the GPS of the terminal 106.

When the position information of the doorbell 102 is registered, password information for releasing the closed state of the key box 104 is generated based on the input information by the application (step S133). In the meantime, the password information is a character string in which numbers, English characters and the like are combined, for example.

The user transmits the password information from the terminal 106 to the terminal of a visitor, for example, a smartphone (step S 134).

When the visitor arrives at the residence, the visitor inputs the password to the operation unit 207 (step S135).

The input password information is transmitted to the control unit 406 of the key box 104, as a signal. The control unit 406 compares the received password information and a preset password for releasing the closed state of the key box 104 (step S136).

When the received password information matches the preset password (YES in step S136), the control unit 406 controls to release the closed state of the key box 104 (step S137). On the other hand, when the password does not match (NO in step S136), the control unit 406 keeps the closed state of the key box 104 (step S138).

### <Fifth Operation Example>

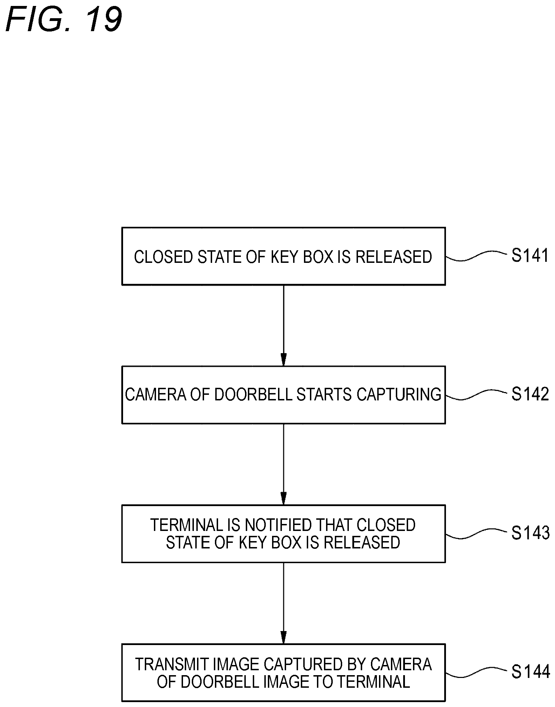

Subsequently, a flow after the closed state of the key box 104 is released until a notification indicating the release is sent to the terminal 106 is described with reference to FIG. 19. FIG. 19 is a flowchart depicting a flow after the closed state of the key box 104 is released until a notification indicating the release is sent to the terminal 106.

When any one authentication method of the first operation example to the fourth operation example is executed, the closed state of the key box 104 is released (step S141). When the closed state of the key box 104 is released, the control unit 406 transmits a capturing start signal to the control unit 209 of the doorbell 102. When the control unit 209 receives the capturing start signal, the control unit 209 controls the camera 201 to start capturing. The camera 201 starts capturing of the visitor (step S142).

When the closed state of the key box 104 is released, the control unit 406 transmits a signal, which indicates that the closed state of the key box 104 is released, to the terminal 106 via the network 109. Thereby, the terminal 106 is notified that the closed state of the key box 104 is released (step S143). At this time, the image data captured by the camera 201 is also transmitted to the terminal 106 (step S144).

### <Sixth Operation Example>

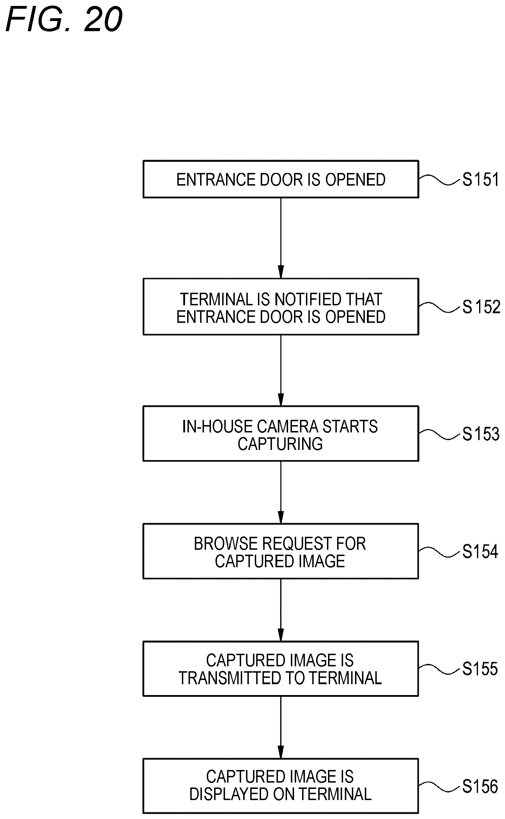

Subsequently, a flow after the entrance door 105 is opened until image data captured by the in-house camera 107 is displayed on the terminal 106 is described with reference to FIG. 20. FIG. 20 is a flowchart depicting a flow after the entrance door 105 is opened until image data captured by the in-house camera 107 is displayed on the terminal 106.

When any one authentication method of the first operation example to the fourth operation example is executed, the closed state of the key box 104 is released. When the closed state of the key box 104 is released, the visitor can take out the key 103 from the key box 104. The visitor can open the entrance door 105 by using the key 103. When the entrance door 105 is opened (step S151), a signal, which indicates that the entrance door 105 is opened, is transmitted from the opening/closing detection unit 503 to the notification unit 504. When the notification unit 504 receives the signal, which indicates that the entrance door 105 is opened, from the opening/closing detection unit 503, the notification unit 504 notifies the terminal 106 that the entrance door 105 is opened (step S152).

Also, the notification unit 504 transmits the signal, which indicates that the entrance door 105 is opened, to the control unit 703 of the in-house camera 107. The control unit 703 controls the camera 701 to start capturing, based on the signal (step S153).

The image data captured by the camera 701 is saved in the saving unit 704. When browsing the image data, the user performs a browse request operation for image data with the operation unit 604 (step S154).

The control unit 606 generates a browse request signal for image data, based on the request, and transmits the same to the control unit 703 of the in-house camera 107. The control unit 703 transmits the image data saved in the saving unit 704 to the terminal 106, based on the request (step S155). As a result, a desired image is displayed on the display unit 603 (step S156),

### <Seventh Operation Example>

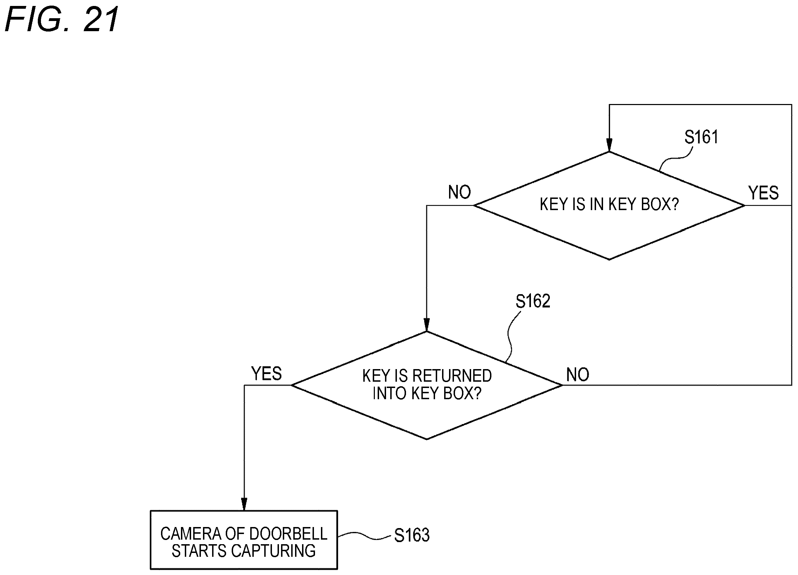

Subsequently, a flow until the camera 201 of the doorbell 102 starts capturing of a visitor when the visitor returns the key 103 to the key box 104 and gets back is described with reference to FIG. 21. FIG. 21 is a flowchart depicting a flow until the camera 201 of the doorbell 102 starts capturing of a visitor when the visitor returns the key 103 to the key box 104 and gets back.

The detection unit 403 monitors all the time whether the key 103 is kept in the key box 104, through the sensor (step S161). When the key 103 is kept in the key box 104, the detection unit 403 transmits the signal A to the control unit 406, and when the key 103 is not kept in the key box 104, the detection unit 403 transmits the signal B to the control unit 406. When the detection unit 403 transmits the signal A (YES in step S161), the detection unit 403 proceeds to step S161. On the other hand, when the detection unit 403 transmits the signal B (NO in step S161), the detection unit 403 proceeds to step S162.

When the key 103 is kept in the key box 104 (YES in step S162), the detection unit 403 transmits the signal A to the control unit 406. The control unit 406 having received the signal A transmits a capturing start signal to the control unit 209 of the doorbell 102. The control unit 209 controls the camera 201 to start capturing, based on the capturing start signal (step S163). On the other hand, when the detection unit 403 transmits the signal B (NO in step S162), the detection unit 403 proceeds to step S161.

### <Eighth Operation Example>

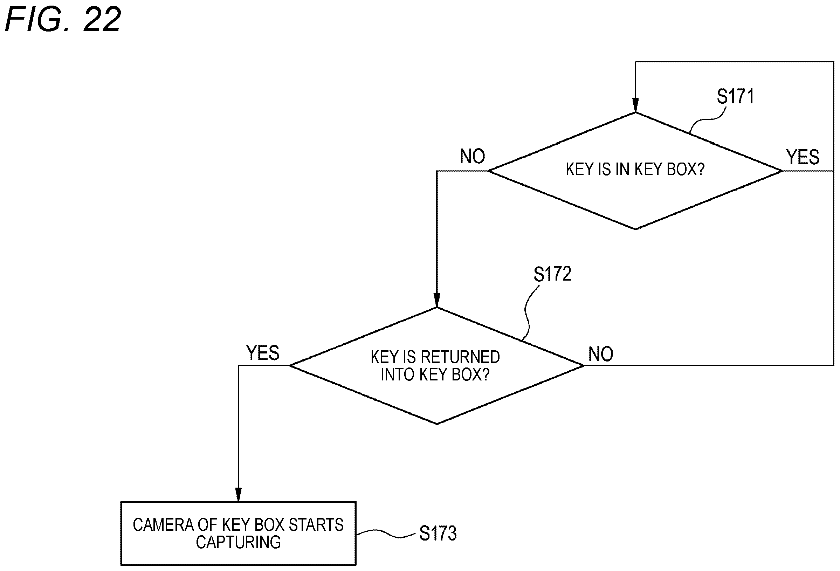

Subsequently, a flow until the camera 401 starts capturing of a visitor when the visitor returns the key 103 to the key box 104 and gets back is described with reference to FIG. 22. FIG. 22 is a flowchart depicting a flow until the camera 401 starts capturing of a visitor when the visitor returns the key 103 to the key box 104 and gets back.

The detection unit 403 monitors all the time whether the key 103 is kept in the key box 104, through the sensor (step S171). When the key 103 is kept in the key box 104, the detection unit 403 transmits the signal A to the control unit 406, and when the key 103 is not kept in the key box 104, the detection unit 403 transmits the signal B to the control unit 406. When the detection unit 403 transmits the signal A (YES in step S171), the detection unit 403 proceeds to step S171. On the other hand, when the detection unit 403 transmits the signal B (NO in step S171), the detection unit 403 proceeds to step S172.

When the key 103 is kept in the key box 104 (YES in step S172), the detection unit 403 transmits the signal A to the control unit 406. The control unit 406 having received the signal A transmits a capturing start signal to the camera 401. The camera 401 having received the capturing start signal starts capturing (step S173). On the other hand, when the detection unit 403 transmits the signal B (NO in step S172), the detection unit 403 proceeds to step S171.

According to the first operation example, in order to release the closed state of the key box 104 in which the key 103 is kept, the two-dimensional code having the password information embedded therein should be read by the camera 201 or the camera 401. For this reason, only the person to whom the resident has transmitted in advance the two-dimensional code having the password information embedded therein is allowed to use the key 103 kept in the key box 104. As a result, it is possible to prevent a person who is not allowed to use the key 103 from acquiring the key 103 kept in the key box 104.

As such, according to the first operation example, it is possible to provide the key management system 101 capable of safely managing the key 103 provided outdoors.

Also, according to the second operation example, the face of the visitor captured by the camera 201 and the face information stored in the storage unit 214 are compared, and the closed state of the key box 104 in which the key 103 is kept is released only when they are associated with each other. For this reason, a person who can acquire the key 103 kept in the key box 104 is limited to the person whom the resident has stored in advance in the storage unit 214, so that it is possible to prevent a person who is not allowed to use the key 103 from acquiring the key 103 kept in the key box 104.

Also, according to the third operation example, only when the determination unit 218 determines that the fingerprint read by the fingerprint recognition unit 215 matches the fingerprint information stored in the storage unit 214, the closed state of the key box 104 in which the key 103 is stored is released. For this reason, a person who can acquire the key 103 kept in the key box 104 is limited to the person who has the fingerprint that the resident has stored in advance in the storage unit 214, so that it is possible to prevent a person who is not allowed to use the key 103 from acquiring the key 103 kept in the key box 104.

Also, according to the fourth operation example, only when the predetermined password is input, the closed state of the key box 104 in which the key 103 is kept is released. For this reason, a person who can acquire the key 103 kept in the key box 104 is limited to the person who knows the password in advance, so that it is possible to prevent a person who is not allowed to use the key 103 from acquiring the key 103 kept in the key box 104.

Also, since the predetermined password of the fourth operation example is a so-called one-time password, the password is frequently changed when the predetermined time elapses.

Also, according to the fifth operation example, when the closed state of the key box 104 is released, the camera 201 of the doorbell 102 starts capturing. For this reason, since the visitor having released the closed state of the key box 104 is captured by the camera 201, it is possible to improve crime prevention.

As such, according to the fifth operation example, it is possible to provide the key management system 101 having improved crime prevention.

Also, according to the fifth operation example, when the closed state of the key box 104 is released, the terminal 106 of the resident is notified that the closed state of the key box 104 is released, so that it is possible to improve crime prevention.

Also, according to the fifth operation example, when notifying the terminal 106 of the resident that the closed state of the key box 104 is released, the doorbell 102 transmits an image of the visitor captured by the camera 201 of the doorbell 102 to the terminal 106 of the resident. For this reason, the resident can know that the closed state of the key box 104 is released, and the person who has released the closed state.

Also, according to the sixth operation example, when the entrance door 105 of the residence is opened, the in-house camera 107 installed in the residence starts capturing. For this reason, since it is possible to capture a visitor who has entered the residence, it is possible to improve crime prevention.

Also, according to the seventh operation example, when the key 103 is kept in the key box 104 in a state where the key 103 is not kept in the key box 104, the camera 201 of the doorbell 102 captures a visitor. For this reason, since it is possible to capture the visitor who enters and then leaves the residence, it is possible to improve crime prevention.

Also, according to the eighth operation example, when the key 103 is kept in the key box 104 in a state where the key 103 is not kept in the key box 104, the camera 401 of the key box 104 captures a visitor. For this reason, since it is possible to capture the visitor who enters and then leaves the residence, it is possible to improve crime prevention.

In the second embodiment, the key box 104 is installed on the left side of the entrance door 105. However, the present invention is not limited thereto. For example, the key box 104 may be provided at the front of the door of the residence. Also, when the key box 104 is provided at the front of the door of the residence, a plurality of keys such as keys for opening/closing the door and the entrance door 105 may be kept in the key box 104.

In the second embodiment, the camera 201 can also function as a camera for face capturing. However, the present invention is not limited thereto. For example, the doorbell 102 may include a camera for face capturing that is a camera other than the camera 201.

Hereinbelow, a third embodiment and a fourth embodiment of the present invention are described with reference to the drawings.

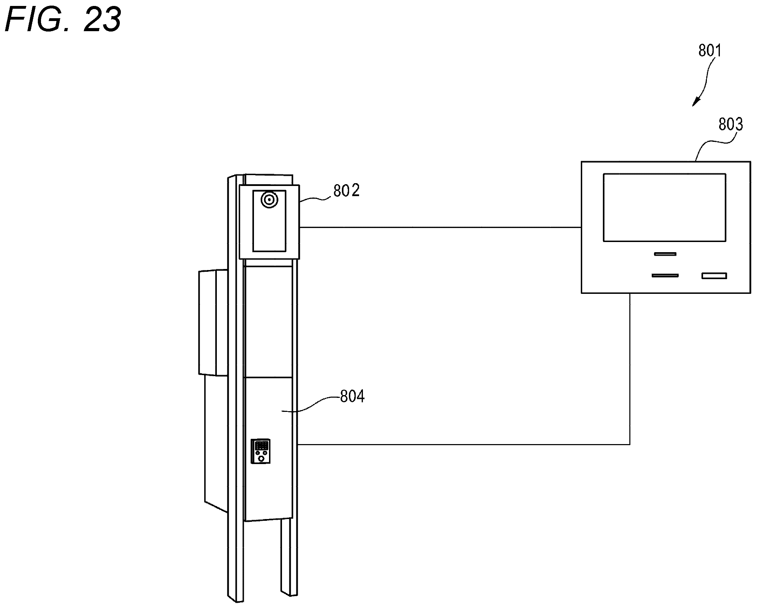

FIG. 23 is a pictorial view of an intercom system 801 in accordance with a third embodiment and a fourth embodiment of the present invention. As shown in FIG. 23, the intercom system 801 includes an entrance slave unit 802, a terminal 803, and a delivery box 804. The entrance slave unit 802, the terminal 803 and the delivery box 804 can perform direct or indirect communication each other in a wired or wireless manner. As the terminal 803, for example, an electronic device such as an intercom master unit, a tablet terminal, a smartphone and the like can be used.

### (Third Embodiment)

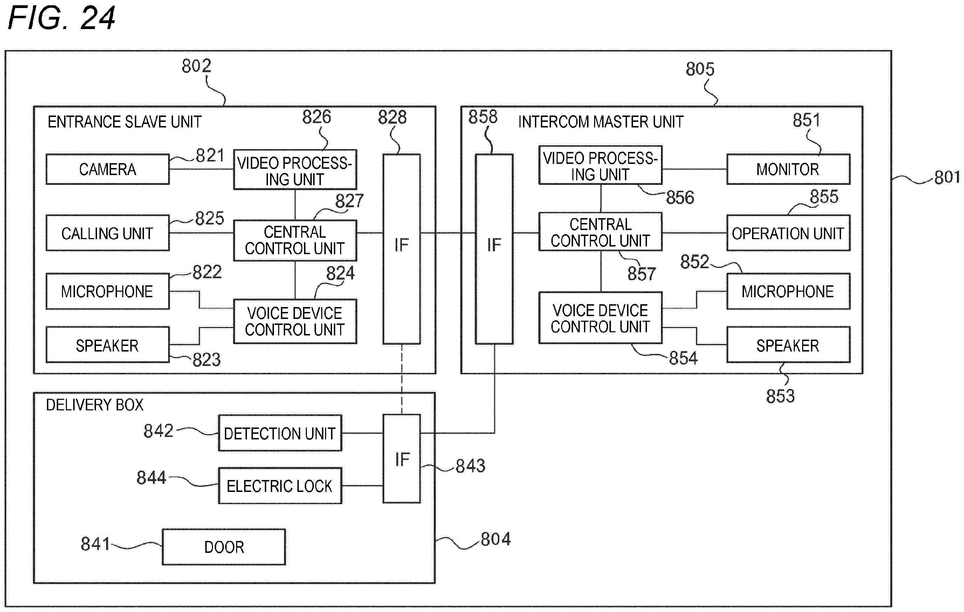

FIG. 24 is a functional block diagram of the intercom system 801 in accordance with the third embodiment. In the present embodiment, an intercom master unit 805 is used as the terminal 803. As shown in FIG. 24, the entrance slave unit 802 includes a camera 821, a microphone 822, a speaker 823, a voice device control unit 824, a calling unit 825, a video processing unit 826, a central control unit 827, and a communication IF (interface) 828.

The camera 821 is configured to capture a surrounding including the front of the entrance slave unit 802. When a visitor exists in a capturing range of the camera 821, the camera 821 captures the visitor. Also, the camera 821 can read an image such as a two-dimensional code, a barcode and the like. The microphone 822 is to capture a voice such as a voice of a visitor near the entrance slave unit 802. The speaker 823 is configured to output voice data controlled by the voice device control unit 824, as a voice.

The voice device control unit 824 is a control unit for controlling operations of the microphone 822 and the speaker 823. The voice device control unit 824 may include at least one microcontroller including one or more processors and one or more memories, and other electronic circuit including an active element such as a transistor and a passive element. The voice device control unit 824 is configured the speaker 823 to output the voice data, as a voice, for example.

The voice device control unit 824 can store data relating to artificial voice and alert sound. As the artificial voice, for example, there is a voice "Please stop the mischievous play on the delivery box." As the alert sound, for example, there is a siren sound. Based on the data relating to the artificial voice and alert sound, the voice device control unit 824 is configured to transmit a drive signal to the speaker 823 so as to cause the speaker 823 to output a voice.

The calling unit 825 includes a signal generator and a calling button, which are not shown. When a visitor presses the calling button, the calling unit 825 generates a calling signal, and transmits the calling signal to the central control unit 827.

The video processing unit 826 is a control unit for controlling an operation of the camera 821 and image data processing. The video processing unit 826 may include at least one microcontroller including one or more processors and one or more memories, and other electronic circuit including an active element such as a transistor and a passive element. The video processing unit 826 is configured to transmit image data (also referred to as captured data) captured by the camera 821 to the central control unit 827, for example. Also, the video processing unit 826 is configured to analyze an image and to transmit a result of the analysis to the central control unit 827. Also, the video processing unit 826 can drive the camera 821, based on a camera drive signal received from the central control unit 827.

The central control unit 827 is a control unit for controlling operations of the voice device control unit 824 and the video processing unit 826, and transmission and reception of data between the intercom master unit 805 and the delivery box 804. The central control unit 827 may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit).

When the central control unit 827 receives the calling signal, the central control unit 827 transmits the signal to the intercom master unit 805. Also, when the central control unit 827 receives the calling signal for a predetermined time, the central control unit 827 generates a request signal for changing a mode into a mode (delivery mode) of comparing whether a visitor is a delivery person. The request signal is transmitted to the video processing unit 826 or the intercom master unit 805.

When the central control unit 827 receives an open signal from the delivery box 804, the central control unit 827 generates a camera drive signal, and transmits the camera drive signal to the video processing unit 826. The central control unit 827 is configured to control the video processing unit 826 so as to drive the camera 821, based on the camera drive signal.

In the meantime, at least some of functions of at least one of the voice device control unit 824 and the video processing unit 826 in the entrance slave unit 802 can also be implemented by cooperation of the processor and memory of the central control unit 827.

The communication IF 828 is a device or an interface enabling communication with the intercom master unit 805 or the delivery box 804.

As shown in FIG. 24, the intercom master unit 805 includes a monitor 851, a microphone 852, a speaker 853, a voice device control unit 854, an operation unit 855, a video processing unit 856, a central control unit 857, and a communication IF (interface) 858.

The monitor 851 is a display such as a liquid crystal monitor, an organic EL display and the like, and is configured to display an image and the like captured by the camera 821.

The microphone 852 is to capture a voice such as a voice of a resident (also referred to as user) near the intercom master unit 805. The speaker 853 is configured to output a voice such as a voice of a visitor captured by the microphone 822 of the entrance slave unit 802 and an informing sound.

The voice device control unit 854 may be configured by hardware that is similar to the voice device control unit 824. The voice device control unit 854 is a control unit for controlling operations of the microphone 852 and the speaker 853. The voice device control unit 854 is configured to control the speaker 853 to output an informing sound, which indicates that the door 841 of the delivery box 804 is in the opened state, for example.

The operation unit 855 is configured to receive diverse input operations of the resident. The diverse input operations include, for example, an operation for a resident to respond, in response to a visitor's operating the calling unit 825, an operation of causing the speaker 823 to output a voice of a resident having uttered toward the microphone 852, an operation of causing the speaker 823 to output a warning message, a warning sound and the like, an operation of driving the camera 821, and the like. The operation unit 855 is configured to generate diverse signals, based on the received diverse input operations, and to transmit the same to the central control unit 857. The operation unit 855 may be configured by buttons for respective operations or the monitor 851 may be configured to include a touch panel having functions of the operation unit 855.

The video processing unit 856 may be configured by hardware that is similar to the video processing unit 826. The video processing unit 856 is configured to display an image on the monitor 851, based on the image data transmitted from the entrance slave unit 802.

Also, the video processing unit 856 may be configured to perform the image analysis, instead of the video processing unit 826,

The central control unit 857 is a control unit for controlling operations of the voice device control unit 854 and the video processing unit 856 and transmission and reception of data that is performed between the entrance slave unit 802 and the delivery box 804. The central control unit 857 may include at least one microcontroller including one or more processors and one or more memories, and other electronic circuit including an active element such as a transistor and a passive element. The processor is, for example, a CPU (Central Processing Unit), an MPU (Micro Processing Unit), a GPU (Graphics Processing Unit) and/or a TPU (Tensor Processing Unit).

The central control unit 857 is configured to generate, based on the request signal transmitted from the entrance slave unit 802, a signal for requesting drive of the camera 821. The drive request signal is transmitted to the entrance slave unit 802. Also, the central control unit 857 is configured to control the video processing unit 856 so that the video processing unit 856 is to perform image analysis for the data captured by the camera 821 of the entrance slave unit 802.

When it is confirmed that the visitor is a delivery person, as a result of the image analysis, the central control unit 857 generate an unlock signal for unlocking the door 841 of the delivery box 804 and transmits the same to the delivery box 804. In the meantime, the above operations may also be performed by the central control unit 827 of the entrance slave unit 802.

Also, when the central control unit 857 receives the calling signal from the calling unit 825 of the entrance slave unit 802 for a predetermined time, instead of receiving the request signal from the entrance slave unit 802, the central control unit 857 changes the mode of the intercom master unit 805 into the delivery mode. When the mode is changed to the delivery mode, the central control unit 857 generates a request signal for driving the camera 821 and transmits the same to the entrance slave unit 802. Also, in this case, the central control unit 857 is configured to control the video processing unit 856 so that the video processing unit 856 is to perform image analysis for the data captured by the camera 821 of the entrance slave unit 802.

In the meantime, at least some of functions of at least one of the voice device control unit 854 and the video processing unit 856 in the intercom master unit 805 can also be implemented by cooperation of the processor and memory of the central control unit 857.

The communication IF 858 is a device or an interface enabling communication with the entrance slave unit 802 or the delivery box 804.

As shown in FIG. 24, the delivery box 804 may include a door 841, a detection unit 842, a communication IF (interface) 843, and an electric lock 844. In the meantime, the delivery box 804 may not include the electric lock 844.

The door 841 is configured to be openable/closable. When the door 841 is in an opened state, a resident, a visitor and the like can access a space in which a delivery item can be accommodated.

The detection unit 842 has a sensor. The detection unit 842 is configured to detect at predetermined time intervals or continuously an opened/closed state of the door 841 of the delivery box 804 by using infrared ray, microwave, millimeter wave and the like. When the door 841 of the delivery box 804 is in the opened state, the detection unit 842 transmits a signal, which indicates that the door 841 is in the opened state, to the entrance slave unit 802 or the intercom master unit 805.

The communication IF 843 is a device or an interface enabling communication with the entrance slave unit 802 or the intercom master unit 805.

The electric lock 844 can lock the door 841. The door 841 is normally locked by the electric lock 844. The electric lock 844 can open or close the door 841 by an unlock or lock signal from the entrance slave unit 802 or the intercom master unit 805. As such, the delivery box 804 having the electric lock 844 can be locked and unlocked, in response to an electric signal.

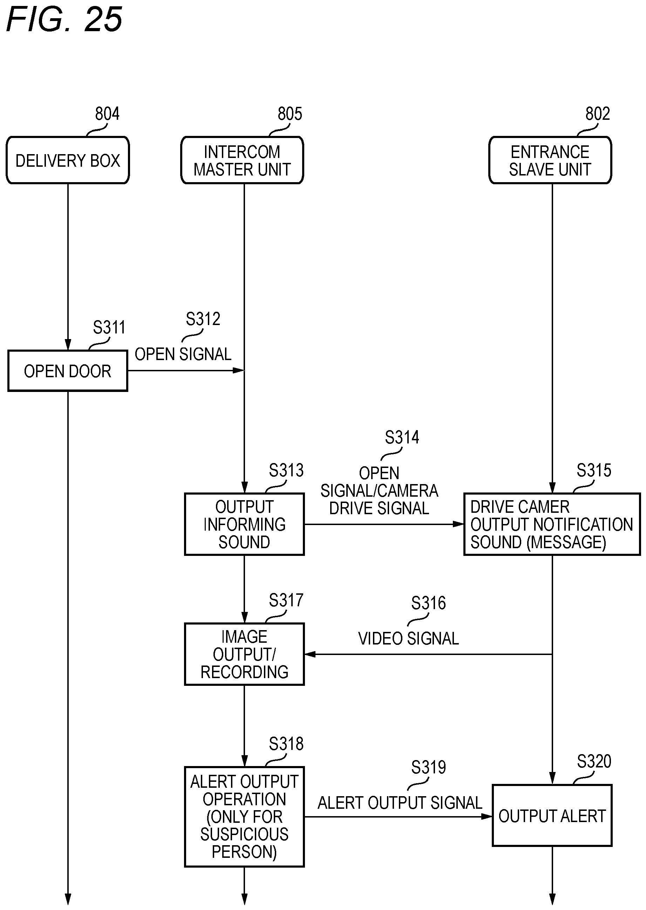

FIG. 25 is a sequence diagram depicting a flow of operations of the intercom system 801 with no electric lock 844 in accordance with the third embodiment. A visitor who visits a residence opens the door 841 (step S311).

When the door 841 is opened, the detection unit 842 transmits a signal (open signal), which indicates that the door 841 is in the opened state, to the central control unit 857 of the intercom master unit 805 (step S312).

The central control unit 857 having received the open signal controls the voice device control unit 854 to output an informing sound from the speaker 853 (step S313). The informing sound is to inform a resident that the door 841 is opened. The informing sound may be a buzzer sound or a message voice.

Also, when the central control unit 857 receives the open signal from the detection unit 842, the central control unit 857 generates a camera drive signal. The central control unit 857 transmits the open signal and camera drive signal to the entrance slave unit 802 (step S814). Thereby, the camera 821 is driven (step S315). Also, based on the open signal, a message "The capturing starts from now on." is output from the speaker 823 (step S315).

When the camera 821 starts capturing, the camera 821 transmits the captured data to the video processing unit 826. The video processing unit 826 transmits the captured data to the central control unit 827. The central control unit 827 transmits the captured data to the intercom master unit 805, as a video signal (step S316).

The video processing unit 856 displays the captured image on the monitor 851, based on the captured data transmitted from the entrance slave unit 802 (step S317). In the meantime, the captured data received from the entrance slave unit 802 is stored (recorded) in a storage unit (not shown) (step S317).

When the resident determines from the image displayed on the monitor 851 that the door 841 is opened due to the mischievous play, the resident inputs, to the operation unit 855, an operation (alert output operation) for causing the speaker 823 to output a message including a warning to the visitor, an alert sound and the like (step S318). The operation unit 855 generates an alert output signal, based on the input operation, and transmit the signal to the central control unit 857. The central control unit 857 transmits the alert output signal to the central control unit 827 of the entrance slave unit 802 (step S319).

When the central control unit 827 receives the alert output signal, the central control unit 827 controls the voice device control unit 824 to output an alert based on the signal from the speaker 823 (step S320).

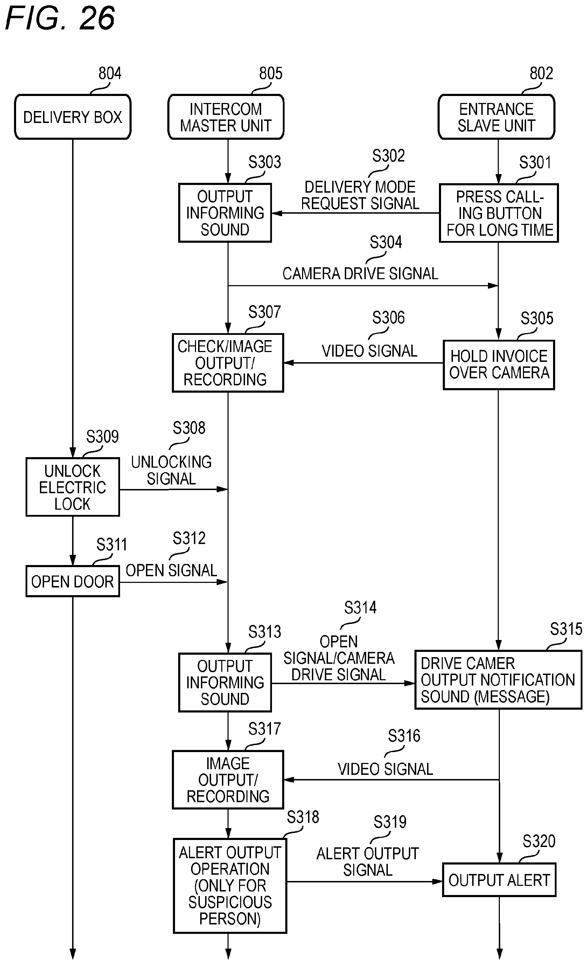

FIG. 26 is a sequence diagram depicting a flow of operations of the intercom system 801 with the electric lock 844 in accordance with the third embodiment. This flow is different from the flow shown in FIG. 25, in that a visitor should unlock the electric lock 844 before opening the door 841. A visitor (delivery person) who visits a residence continues to press the calling button provided on the entrance slave unit 802 for a predetermined time (step S301). Thereby, a signal for requesting a change to the delivery mode is generated and transmitted to the intercom master unit 805 (step S302). As a result, the intercom master unit 805 is switched to the delivery mode.

When the intercom master unit 805 is switched to the delivery mode, an informing sound is output from the speaker 853 (step S303). The informing sound is to inform the resident that the intercom master unit 805 is switched to the delivery mode. The informing sound may be a buzzer sound or a message voice.

When the intercom master unit 805 is switched to the delivery mode, the central control unit 857 generates a camera drive signal and transmits the same to the entrance slave unit 802 (step S304). Thereby, the camera 821 is driven. At this time, a message "The capturing starts from now on." may be output from the speaker 823.

When the camera 821 is driven, the camera 821 can be caused to read an image indicating that the visitor is a delivery person. At this time, the voice device control unit 824 may control the speaker 823 to output a message "Please hold the invoice over the camera." The visitor causes the camera 821 to read an image indicating that the visitor is a delivery person. As the image, for example, an invoice such as a delivery memo may be used. When causing the camera 821 to read an invoice such as a delivery memo, the visitor holds the invoice over the camera 821 (step S305). The camera 821 captures the invoice.

In the meantime, herein, the example where it is identified whether the visitor is a delivery person, based on a layout of a fill-in frame of the invoice, has been described. However, the present invention is not limited to the example. For example, a two-dimensional code, a barcode or the like indicating that a visitor is a delivery person may also be used.

The video processing unit 826 transmits the image data captured by the camera 821 to the central control unit 827. The central control unit 827 transmits the image data, as a video signal, to the intercom master unit 805 (step S306).

The video processing unit 856 of the intercom master unit 805 analyzes whether the invoice is a delivery memo or the like, from the layout of the fill-in frame of the invoice included in the image data received from the entrance slave unit 802. When the invoice is, for example, a delivery memo, the video processing unit 856 generates a checking signal (step S307), and transmits the same to the central control unit 857. Also, the video processing unit 856 displays, on the monitor 851, the captured image, based on the image data transmitted from the entrance slave unit 802 (step S307). In the meantime, the image data transmitted from the entrance slave unit 802 is stored (recorded) in a storage unit (not shown) (step S307).

When it is not checked that the visitor is a delivery person, the intercom master unit 805 transmits the result to the entrance slave unit 802. In this case, the entrance slave unit 802 generates an artificial voice or alert sound for notifying that the checking has not been made, based on the data stored in the voice device control unit 824, and outputs the same from the speaker 823.

Also, in this case, a message indicating that the checking has not been made is displayed on the monitor 851 of the intercom master unit 805. Thereby, the resident can recognize that the checking has not been made.

On the other hand, when it is checked that the visitor is a delivery person, the central control unit 857 transmits an unlocking signal to the delivery box 804 (step S308). The delivery box 804 having received the unlocking signal unlocks the electric lock 844 (step S309). The door 841 is in an openable/closable state. Thereby, the delivery person can open the door 841 of the delivery box 804 (step S311), and put a delivery item into an accommodation space of the delivery box 804. The delivery person puts the delivery item into the accommodation space and then closes the door 841. When a predetermined time elapses since the door 841 is closed, the electric lock 844 can lock the door 841.

The flow (from step S311 to S320) after the delivery person opens the door 841 of the delivery box 804 is similar to the case where the delivery box 804 is not provided with the electric lock 844. Therefore, the descriptions thereof are omitted.

In the third embodiment, when the unlocking signal is transmitted from the central control unit 857 of the intercom master unit 805 to the delivery box 804, and when the open signal is transmitted from the detection unit 842 of the delivery box 804 to the central control unit 857 of the intercom master unit 805, the informing sound is output from the speaker 853 of the intercom master unit 805. However, the present invention is not limited thereto. Each step from S311 to S313 may be omitted. That is, when the informing sound, which is output when the unlocking signal is transmitted from the central control unit 857 to the delivery box 804, is output (step S310), the central control unit 857 may generate the open signal and the camera drive signal, and transmit the same to the entrance slave unit 802 (step S314).

### (Fourth Embodiment)

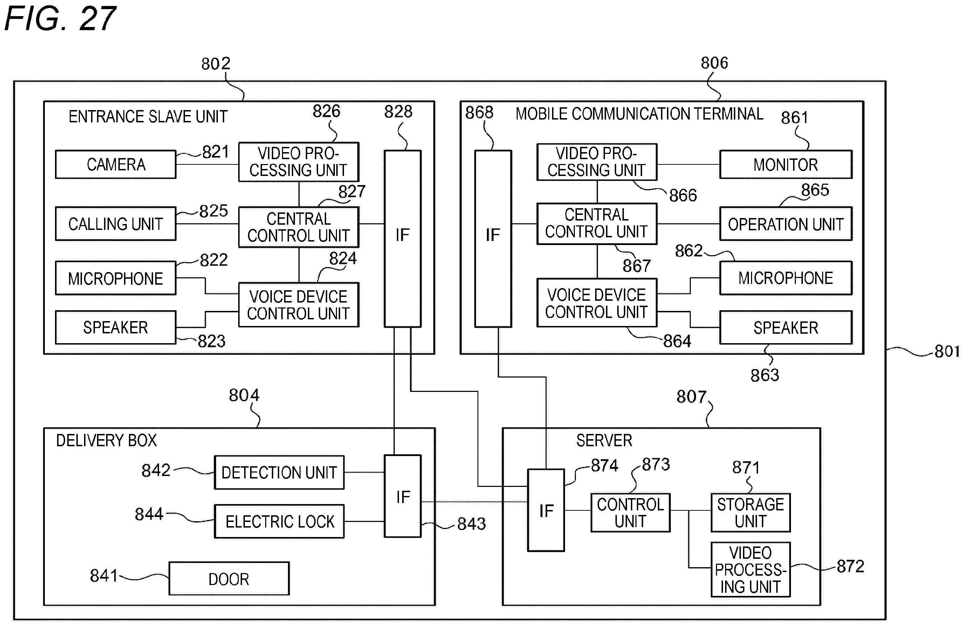

Subsequently, an intercom system 801 in accordance with a fourth embodiment is described with reference to FIGS. 27 to 30. FIG. 27 is a functional block diagram of the intercom system 801 in accordance with the fourth embodiment.

The fourth embodiment is different from the third embodiment, in that a mobile communication terminal 806 and a server 807 are used instead of the intercom master unit 805. As shown in FIG. 27, the intercom system 801 of the fourth embodiment includes an entrance slave unit 802, a mobile communication terminal 806, a server 807, and a delivery box 804.

The entrance slave unit 802 and the delivery box 804 of the fourth embodiment are similar to the entrance slave unit 802 and the delivery box 804 of the third embodiment, and the descriptions thereof are thus omitted. The mobile communication terminal 806 is an electronic device such as a tablet terminal, a smartphone and the like.

As shown in FIG. 27, the mobile communication terminal 806 includes a display unit 861, a microphone 862, a speaker 863, a voice device control unit 864, an operation unit 865, a video processing unit 866, a central control unit 867, and a communication IF (interface) 868.

The display unit 861 is a touch screen type display such as a liquid crystal monitor, an organic EL display and the like, and is configured to display an operation screen, an image captured by the camera 821, and the like.

The microphone 862 is to capture a voice such as a voice of a user of the mobile communication terminal 806. The speaker 863 is to output a voice such as a voice of a visitor captured by the microphone 822 of the entrance slave unit 802, and an informing sound.

The voice device control unit 864 may be configured by hardware that is similar to the voice device control unit 854 of the intercom master unit 805. The voice device control unit 864 is a control unit for controlling operations of the microphone 862 and the speaker 863.

The operation unit 865 is a touch panel superimposed on the display unit 861, operation buttons attached to the mobile communication terminal 806, and the like, for example. The operation unit 865 is configured to receive diverse input operations of the user. The diverse input operations include, for example, an operation for a resident to respond, in response to a visitor's operating the calling unit 825, an operation of causing the speaker 823 to output a voice of a user having uttered toward the microphone 862, an operation of causing the speaker 823 to output a warning message, a warning sound and the like, an operation of displaying image data on the display unit 861, and the like. The operation unit 865 is configured to generate diverse signals, based on the received diverse input operations, and to transmit the same to the central control unit 867.

The video processing unit 866 may be configured by hardware that is similar to the video processing unit 826. The video processing unit 866 is configured to display image data transmitted from the server 807 on the display unit 861.

The central control unit 867 is a control unit for controlling operations of the voice device control unit 864 and the video processing unit 866 and transmission and reception of data that is performed among the entrance slave unit 802, the server 807 and the delivery box 804. The central control unit 867 may be configured by hardware that is similar to the central control unit 827.

When it is checked that a visitor is a delivery person, the central control unit 867 generates an unlocking signal for unlocking the door 841 of the delivery box 804, and transmits the same to the delivery box 804. In the meantime, the above operations may also be performed by the central control unit 827 of the entrance slave unit 802.

When the central control unit 867 receives an image acquisition signal or an alert output signal from the operation unit 865, the central control unit 867 transmits the signal to the server 807.

The communication IF 868 is a device or an interface enabling communication with the server 807. The communication IF 868 and the server 807 can perform communication with each other via an Internet line and the like.

As shown in FIG. 27, the server 807 includes a storage unit 871, a video processing unit 872, a control unit 873, and a communication IF (interface) 874. The server 807 is, for example, a cloud server.

The storage unit 871 has a storage area in which diverse electric signals, voice data, sound data, image data and the like can be saved.

The video processing unit 872 may be configured by hardware that is similar to the video processing unit 826. The video processing unit 872 can perform image analysis for image data captured by the camera 821. The video processing unit 872 is configured to transmit a result of the analysis to the control unit 873.

The control unit 873 is a control unit for controlling operations of the storage unit 871 and the video processing unit 872, and transmission and reception of data that is performed between the entrance slave unit 802 and the mobile communication terminal 806. The control unit 873 may be configured by hardware that is similar to the central control unit 827.

When the control unit 873 receives an open signal from the detection unit 842, the control unit 873 transmits informing sound data stored in the storage unit 871 for informing the user that the door 841 is opened to the mobile communication terminal 806, based on the open signal.

When the control unit 873 receives an image acquisition signal from the central control unit 867, the control unit 873 controls the storage unit 871 to transmit image data, based on the image acquisition signal.

The communication IF 874 is a device or an interface enabling communication with the entrance slave unit 802 or the mobile communication terminal 806. In the present embodiment, the server 807 connects to the delivery box 804 via the entrance slave unit 802. However, the present invention is not limited thereto. For example, the server 807 may directly connect to the delivery box 804 via the communication IF 874.

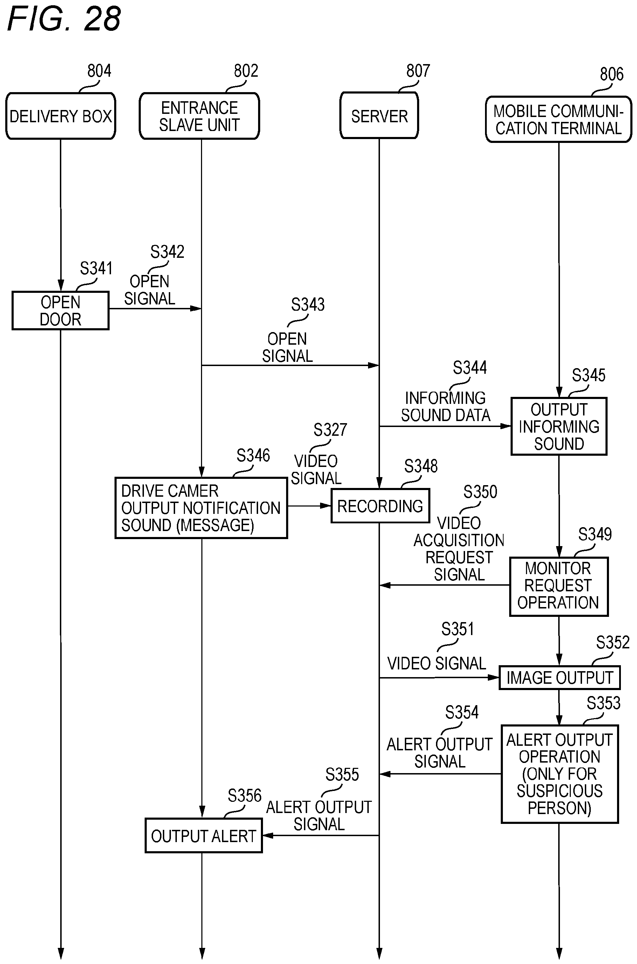

FIG. 28 is a sequence diagram depicting a flow of operations of the intercom system 801 with no electric lock 844 in accordance with the fourth embodiment.

Since steps S341 to S342 are similar to steps S311 to S312, the descriptions thereof are omitted.

The central control unit 827 of the entrance slave unit 802 transmits an open signal received from the delivery box 804 to the control unit 873 of the server 807 (step S343). The control unit 873 transmits informing sound data stored in the storage unit 871 for informing the user that the door 841 is opened to the mobile communication terminal 806 (step S344). The central control unit 867 of the mobile communication terminal 806 controls the speaker 863 to output an informing sound, based on the informing sound data. As a result, the informing sound is output from the speaker 863 (step S845). In the meantime, the informing sound may be a buzzer sound or a message voice.

Also, in the entrance slave unit 802 having received the open signal, the central control unit 827 generates a camera drive signal, and transmits the camera drive signal to the video processing unit 826. The video processing unit 826 drives the camera 821, based on the camera drive signal (step S346). Also, the central control unit 827 generates a notification sound output signal, and transmits the notification sound output signal to the voice device control unit 824. The voice device control unit 824 outputs a notification sound from the speaker 823, based on the notification sound output signal (step S346). The notification sound may include a message "The capturing starts from now on."

When the camera 821 starts the capturing, the camera 821 transmits the captured data to the video processing unit 826. The video processing unit 826 transmits the captured data to the central control unit 827. The central control unit 827 transmits the captured data to the control unit 873, as an image signal (step S347). The control unit 873 controls the storage unit 871 to store (record) the captured data therein (step S348).

The user who hears the informing sound in step S345 inputs, to the operation unit 865, an operation (monitor request operation) for displaying the captured data on the display unit 861 so as to monitor the visitor (step S349). Based on the monitor request operation, the central control unit 867 generates an image acquisition signal and transmits the same to the server 807 (step S350).

The control unit 873 of the server 807 controls the storage unit 871 to transmit the captured data to the control unit 873, based on the received image acquisition signal. The storage unit 871 transmits the captured data to the control unit 873, based on the image acquisition signal. The control unit 873 transmits the captured data to the central control unit 867 (step S351).

The central control unit 867 transmits the received captured data to the video processing unit 866. The video processing unit 866 displays the captured data on the display unit 861 (step S352).

When the user determines from the image displayed on the display unit 861 that the door 841 is opened due to a mischievous play, the user inputs, to the operation unit 865, an operation (alert output operation) for causing the speaker 823 to output a message including a warning to a visitor, an alert sound or the like (step S353). Based on the alert output operation, the central control unit 867 generates an alert output signal, and transmits the signal to the server 807 (step S354). The control unit 873 of the server 807 transmits the alert output signal to the entrance slave unit 802 (step S355).

When the central control unit 827 of the entrance slave unit 802 receives the alert output signal, the central control unit 827 controls the voice device control unit 824 to output the information based on the signal from the speaker 823 (step S356).

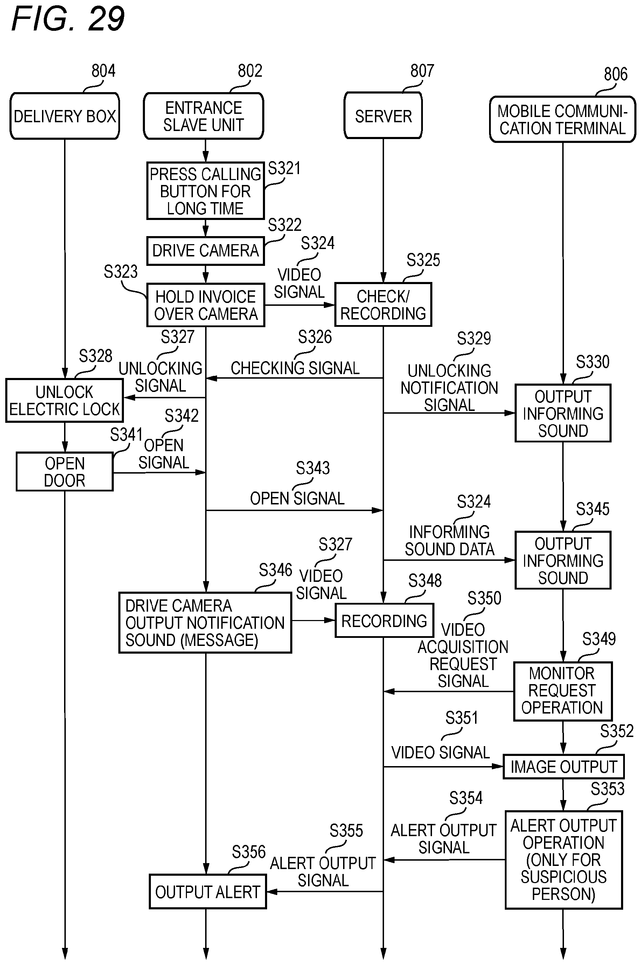

FIG. 29 is a sequence diagram depicting a flow of operations of the intercom system 801 with the electric lock 844 in accordance with the fourth embodiment. This flow is different from the flow shown in FIG. 28, in that it is necessary for a visitor to unlock the electric lock 844 before opening the door 841. A visitor (delivery person) who visits a residence continues to press the calling button provided on the entrance slave unit 802 for a predetermined time (step S321). Thereby, the central control unit 827 switches the entrance slave unit 802 to the delivery mode. Also, the central control unit 827 generates a camera drive signal. The central control unit 827 transmits the camera drive signal to the video processing unit 826. When the video processing unit 826 receives the camera drive signal, the camera 821 is driven (step S322). A message "The capturing starts from now on." may be output from the speaker 823.

When the camera 821 is driven, the camera 821 can be caused to read an image indicating that the visitor is a delivery person. At this time, a message "Please hold the invoice over the camera." may be output from the speaker 823. The visitor causes the camera 821 to read an image indicating that the visitor is a delivery person. For example, when causing the camera 821 to read an invoice such as a delivery memo, the visitor holds the invoice over the camera 821 (step S323). The camera 821 captures the invoice.

In the meantime, herein, the example where it is identified whether the visitor is a delivery person, based on a layout of a fill-in frame of the invoice has been described. However, the present invention is not limited to the example. For example, a two-dimensional code, a barcode or the like indicating that a visitor is a delivery person may also be used.

The entrance slave unit 802 transmits data captured by the camera 821 to the central control unit 827. The central control unit 827 transmits the image data to the server 807, as a video signal (step S324).

The control unit 873 of the server 807 transmits the received image data to the video processing unit 872. The video processing unit 872 transmits the received image data to the storage unit 871. The storage unit 871 stores (records) the image data (step S325). Also, the video processing unit 872 analyzes the image data captured by the camera 821.

The video processing unit 872 analyzes whether the invoice is a delivery memo or the like, from the layout of the fill-in frame of the invoice included in the image data received from the entrance slave unit 802 (step S325). When the invoice is, for example, a delivery memo, the video processing unit 872 generates a checking signal and transmits the same to the entrance slave unit 802 (step S326). When the central control unit 827 of the entrance slave unit 802 receives the checking signal, the central control unit 827 generates an unlocking signal and transmits the unlocking signal to the delivery box 804 (step S327). On the other hand, when it is not checked that the visitor is a delivery person, an artificial voice or alert sound based on the data stored in the voice device control unit 824 is output from the speaker 823.

The delivery box 804 having received the unlocking signal unlocks the electric lock 844 (step S328). The door 841 is in an openable/closable state.

When the video processing unit 872 of the server 807 transmits the checking signal to the entrance slave unit 802, the control unit 873 generates an unlocking notification signal, and transmits the signal to the mobile communication terminal 806 (step S329). When the central control unit 867 of the mobile communication terminal 806 receives the signal, the central control unit 867 controls the voice device control unit 864 to output an informing sound from the speaker 863 (step S330). The informing sound is to inform the user that the electric lock 844 is unlocked. The informing sound may be a buzzer sound or a message voice.

When the electric lock 844 is unlocked (step S328), the delivery person can open the door 841 of the delivery box 804. The delivery person can open the door 841 (step S341), and put a delivery item into the accommodation space of the delivery box 804.

The flow (from step S341 to S356) after the delivery person opens the door 841 of the delivery box 804 is similar to the case where the delivery box 804 is not provided with the electric lock 844. Therefore, the descriptions thereof are omitted.

### (Fifth Embodiment)

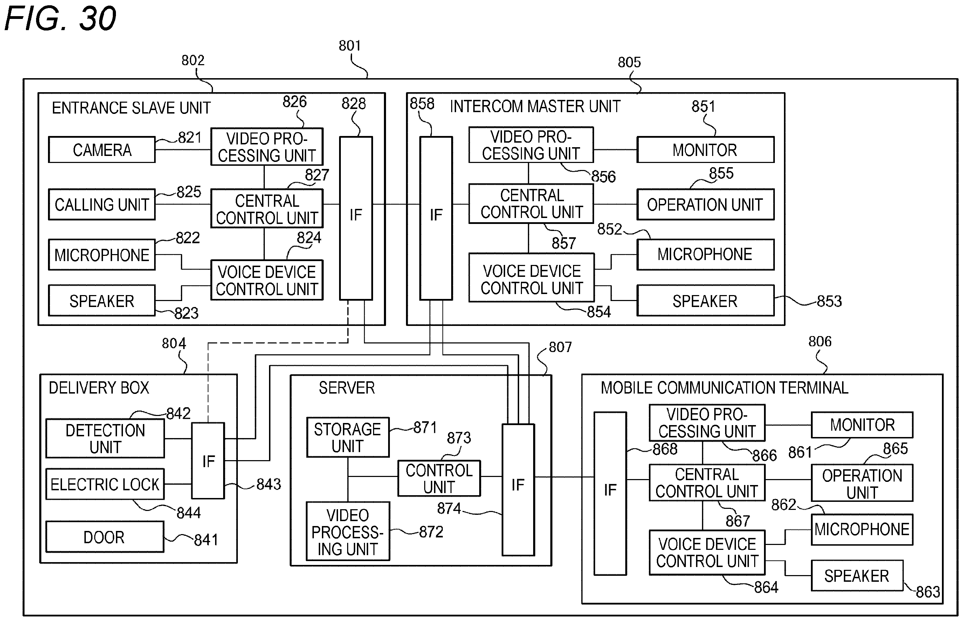

Subsequently, an intercom system 801 in accordance with a fifth embodiment is described with reference to FIGS. 30 to 32. FIG. 30 is a functional block diagram of the intercom system 801 in accordance with the fifth embodiment.

The intercom system 801 of the fifth embodiment is different from the third embodiment, in that it includes a mobile communication terminal 806 and a server 807, in addition to an entrance slave unit 802, an intercom master unit 805 and a delivery box 804. Also, the intercom system 801 of the fifth embodiment is different from the fourth embodiment, in that it includes the intercom master unit 805, in addition to the entrance slave unit 802, the mobile communication terminal 806, the server 807 and the delivery box 804. As shown in FIG. 30, the intercom system 801 of the fifth embodiment includes an entrance slave unit 802, an intercom master unit 805, a mobile communication terminal 806, a server 807, and a delivery box 804.

The entrance slave unit 802, the intercom master unit 805 and the delivery box 804 of the fifth embodiment are similar to the entrance slave unit 802, the intercom master unit 805 and the delivery box 804 of the third embodiment. Also, the mobile communication terminal 806 and the server 807 of the fifth embodiment are similar to the mobile communication terminal 806 and the server 807 of the fourth embodiment. However, the communication IF 828 and the communication IF 858 are different from the third embodiment, in that they connect to the communication IF 874 as well. Also, the communication IF 843 may be configured to connect to the communication IF 874.

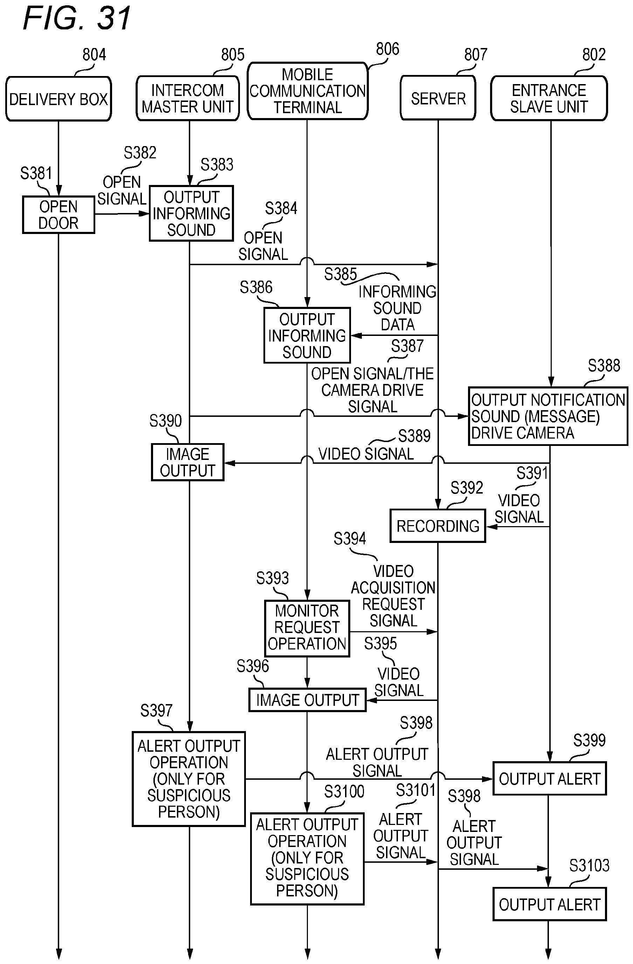

FIG. 31 is a sequence diagram depicting a flow of operations of the intercom system 801 with no electric lock 844 in accordance with the fifth embodiment.

Since steps S381 to S383 are similar to steps S311 to S313, the descriptions thereof are omitted.

The central control unit 857 of the intercom master unit 805 transmits an open signal received from the delivery box 804 to the server 807 (step S384). The control unit 873 of the server 807 transmits the informing sound data stored in the storage unit 871 for informing the user that the door 841 is opened to the mobile communication terminal 806 (step S385). The central control unit 867 controls the speaker 863 to output the informing sound, based on the informing sound data. As a result, the informing sound is output from the speaker 863 (step S386). In the meantime, the informing sound may be a buzzer sound or a message voice.

Since steps S387 to S390 are similar to steps S314 to S317, the descriptions thereof are omitted.

Since steps S391 to S396 are similar to steps S347 to S352, the descriptions thereof are omitted.

Since steps S397 to S399 are similar to steps S318 to S320, the descriptions thereof are omitted.

Since steps S3100 to S3103 are similar to steps S353 to S356, the descriptions thereof are omitted.

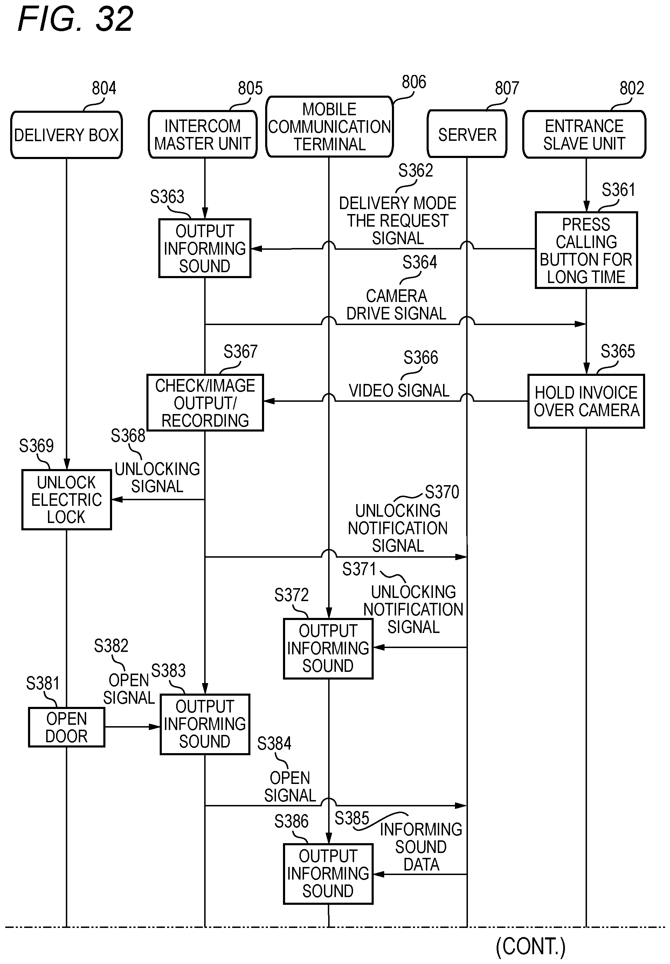

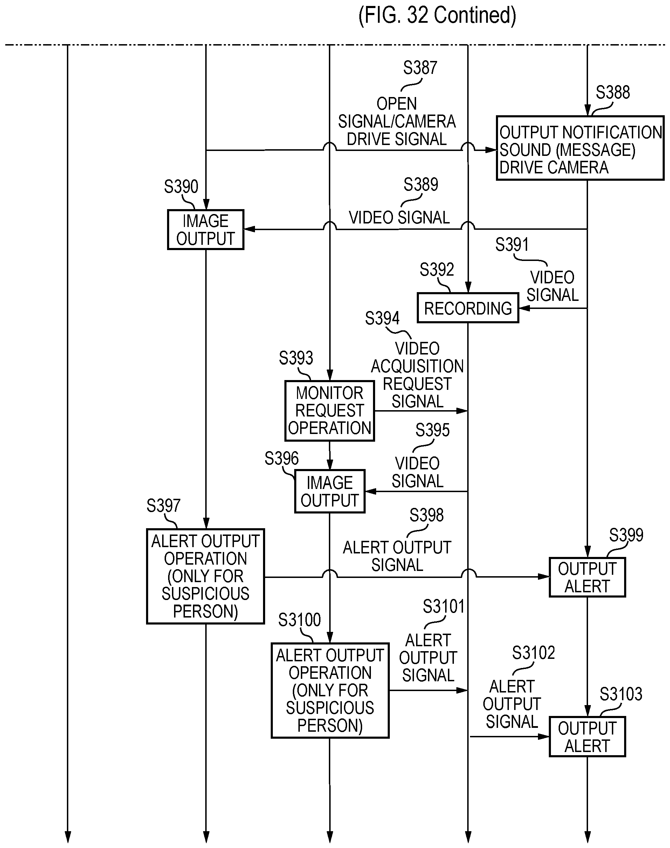

FIG. 32 is a sequence diagram depicting a flow of operations of the intercom system 801 with the electric lock 844 in accordance with the fifth embodiment.

Since steps S361 to S369 are similar to steps S301 to S309, the descriptions thereof are omitted.

When the electric lock 844 is unlocked (step S369), the delivery person can open the door 841 of the delivery box 804. The delivery person can open the door 841 (step S381), and put a delivery item into the accommodation space of the delivery box 804.

When the central control unit 857 of the intercom master unit 805 transmits an unlocking signal to the delivery box 804, the central control unit 857 generates an unlocking notification signal and transmits the same to the server 807 (step S370). The control unit 873 of the server 807 transmits the unlocking notification signal to the mobile communication terminal 806 (step S371). When the central control unit 867 of the mobile communication terminal 806 receives the signal, the central control unit 867 controls the voice device control unit 864 to output an informing sound from the speaker 863 (step S372). The informing sound is to inform the user that the electric lock 844 is unlocked. The informing sound may be a buzzer sound or a message voice.

The flow (from step S381 to S3103) after the delivery person opens the door 841 of the delivery box 804 is similar to the case where the delivery box 804 is not provided with the electric lock 844. Therefore, the descriptions thereof are omitted.

According to the configuration of the third to fifth embodiment, when the door 841 of the delivery box 804 is opened, the informing sound for informing the resident that the door 841 is opened is output from the speaker 853 of the intercom master unit 805. For this reason, since the resident can know that the door 841 is opened, the resident can take some action.

As such, according to the configurations of the third to fifth embodiments, it is possible to provide the intercom system 801 capable of suppressing an influence of the mischievous play on the delivery box 804 on the resident.

According to the configurations of the third to fifth embodiments, when the door 841 of the delivery box 804 is in the opened state, it is informed to the resident by the informing sound. For this reason, the resident can know that the door 841 of the delivery box 804 is in the opened state, without monitoring the terminal 803.

Also, according to the configurations of the third to fifth embodiments, when the door 841 of the delivery box 804 is opened, the notification sound that may include a message "The capturing starts from now on." is output from the speaker 823 of the entrance slave unit 802. For this reason, the mischievous play can be more effectively suppressed for a person who opens the door 841 for the purpose of the mischievous play.

Also, according to the configurations of the third to fifth embodiments, when the door 841 of the delivery box 804 is opened, the camera 821 starts the capturing of the visitor. For this reason, it is possible to specify the person who opens the door 841. Also, when the captured data is saved (recorded), the captured data can be an evidence indicating that the person opened the door 841. For this reason, it is possible to suppress the door 841 from being opened for the purpose of the mischievous play.

Also, according to the configurations of the third to fifth embodiments, in a case where the delivery box 804 has the electric lock 844, the door 841 can be caused to be in the opened state only when it is checked that the visitor is a delivery person. For this reason, it is possible to prevent the door 841 from being opened by a visitor who has a purpose of the mischievous play.

Also, according to the configurations of the third to fifth embodiments, when the resident determines that a visitor intends to open the delivery box for the purpose of the mischievous play, the resident can output an alert or a voice from the speaker 823 of the entrance slave unit 802 by operating the operation unit 855. For this reason, it is possible to prevent the door 841 of the delivery box 804 from being opened by a visitor who has a purpose of the mischievous play.

In the third to fifth embodiments, the resident performs the alert output operation, so that a message including a warning to a visitor, an alert sound or the like is output from the speaker 823. However, the present invention is not limited thereto. For example, when an image indicating that a visitor is a delivery person is not captured for a predetermined time by the camera 821, a message including a warning to a visitor, an alert sound or the like may be automatically output from the speaker 823. Also, when a predetermined time further elapses, the delivery mode of the entrance slave unit 802 is released.

### (Sixth Embodiment)

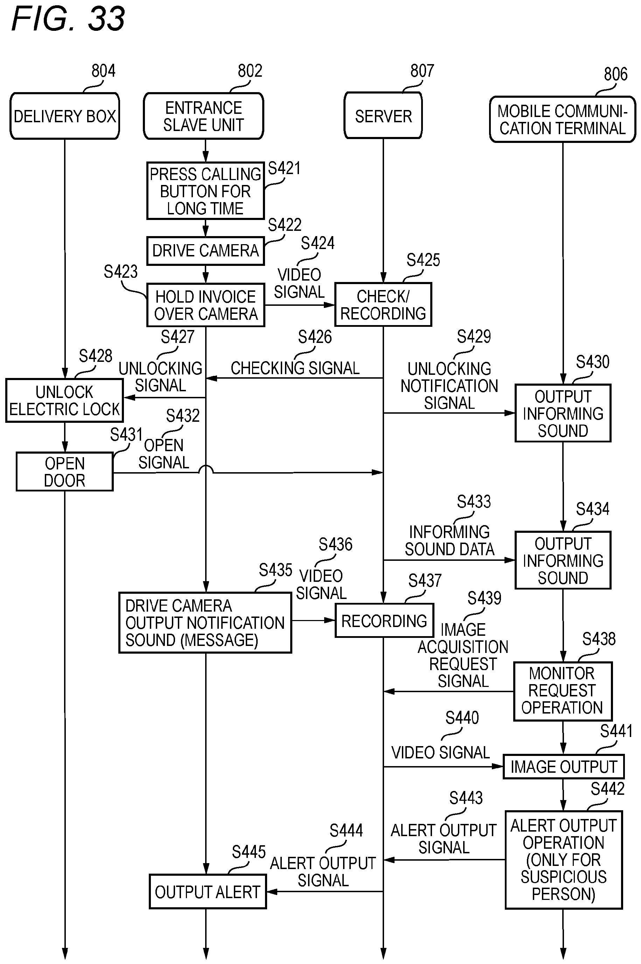

FIG. 33 is a sequence diagram depicting a flow of operations of an intercom system 801 with an electric lock 844 in accordance with a sixth embodiment. Since steps S421 to S431 are similar to step S321 to S331 shown in FIG. 29, the descriptions thereof are omitted.

After the electric lock 844 is unlocked, a delivery person opens the door 841 of the delivery box 804 (step S431). When the door 841 is opened, the detection unit 842 transmits, to the server 807, a signal (open signal) indicating that the door 841 is in the opened state (step S432).

The control unit 873 of the server 807 having received the open signal transmits the informing sound data stored in the storage unit 871 for informing the user that the door 841 is opened to the mobile communication terminal 806 (step S433). The central control unit 867 of the mobile communication terminal 806 controls the voice device control unit 864 to output the informing sound based on the informing sound data from the speaker 863 (step S434). In the meantime, The informing sound may be a buzzer sound or a message voice.

Also, when the entrance slave unit 802 transmits an unlocking signal to the delivery box 804 (step S427), the central control unit 827 generates a camera drive signal, and transmits the camera drive signal to the video processing unit 826. The video processing unit 826 drives the camera 821, based on the camera drive signal (step S435). Also, the central control unit 827 generates a notification sound output signal, and transmits the notification sound output signal to the voice device control unit 824. The voice device control unit 824 outputs a notification sound from the speaker 823, based on the notification sound output signal (step S435). The notification sound may include a message "The capturing starts from now on.", for example.

When the camera 821 starts capturing, the camera 821 transmits the captured data to the video processing unit 826. The video processing unit 826 transmits the captured data to the central control unit 827. The central control unit 827 transmits the captured data to the control unit 873, as a video signal (step S436). The control unit 873 controls the storage unit 871 to store (record) the captured data (step S437).

Since steps S438 to S445 are similar to steps S349 to S356 shown in FIG. 29, the descriptions are omitted.

In the sixth embodiment, when a checking signal, which is one of signals for unlocking the electric lock 844, is transmitted from the video processing unit 872 to the entrance slave unit 802, and when the open signal is transmitted from the detection unit 842 to the control unit 873 of the server 807, the informing sound is output from the speaker 863 of the mobile communication terminal 806. However, the present invention is not limited thereto. For example, each step from S831 to S834 may be omitted.

### (Seventh Embodiment)

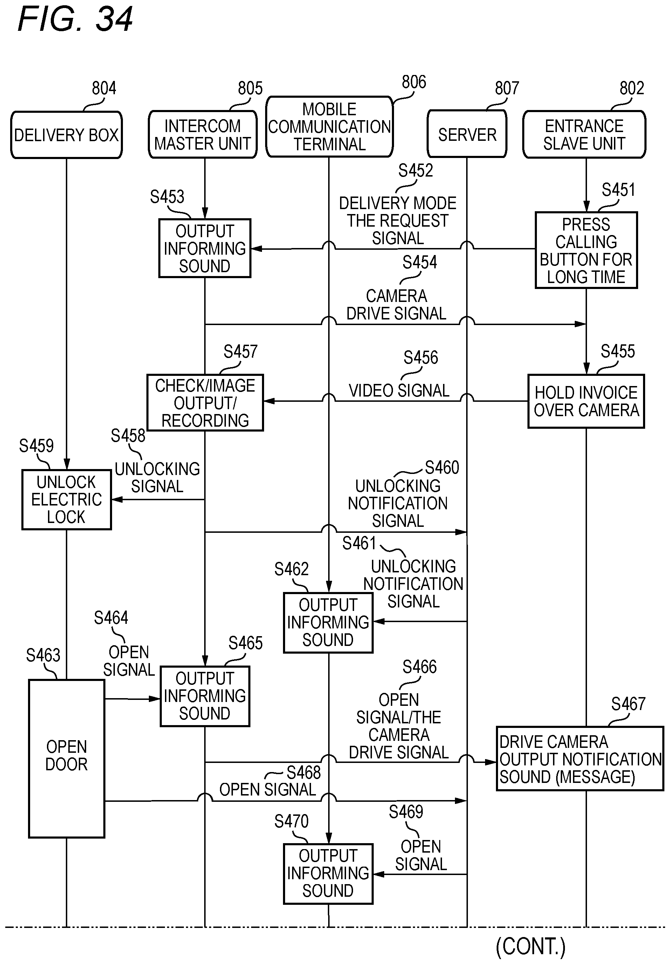

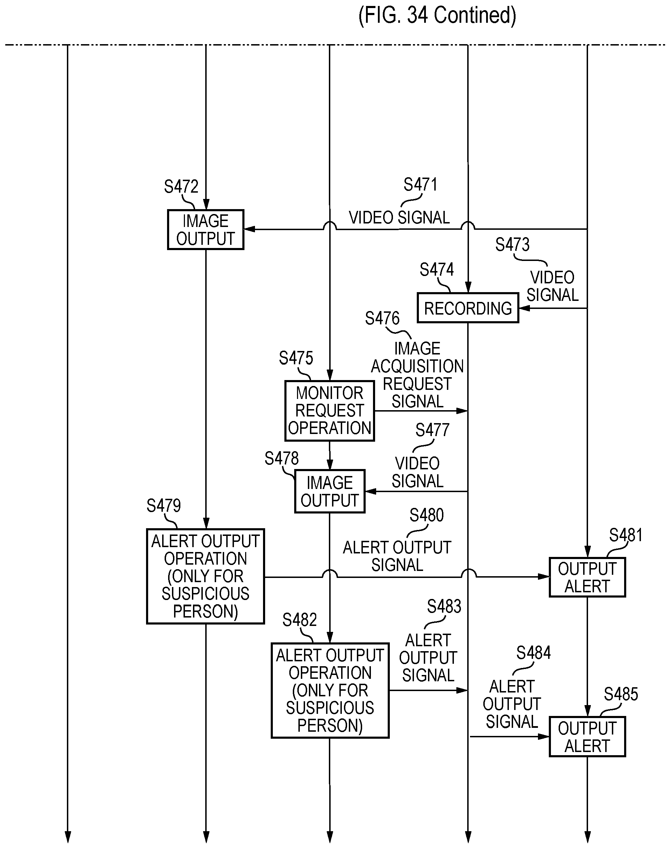

Subsequently, an intercom system 801 in accordance with a seventh embodiment is described with reference to FIG. 34.

FIG. 34 is a sequence diagram depicting a flow of operations of an intercom system 801 with an electric lock 844 in accordance with the seventh embodiment.

Since steps S451 to S459 are similar to steps S301 to S309, the descriptions thereof are omitted.

When the central control unit 857 of the intercom master unit 805 transmits an unlocking signal to the delivery box 804, the central control unit 857 generates an unlocking notification signal and transmits the same to the server 807 (step S460). The control unit 873 of the server 807 transmits the signal to the mobile communication terminal 806 (step S461). When the central control unit 867 of the mobile communication terminal 806 receives the signal, the central control unit 867 controls the voice device control unit 864 to output an informing sound from the speaker 863 (step S462). The informing sound is to inform the user that the electric lock 844 is unlocked. The informing sound may be a buzzer sound or a message voice.

After the electric lock 844 is unlocked (step S459), a delivery person opens the door 841 of the delivery box 804 (step S463). When the door 841 is opened, the detection unit 842 transmits, to the central control unit 857 of the intercom master unit 805, a signal (open signal) indicating that the door 841 is in the opened state (step S464). The central control unit 857 having received the open signal controls the voice device control unit 854 to output an informing sound from the speaker 853 (step S465). The informing sound is to inform a resident that the door 841 is opened. The informing sound may be a buzzer sound or a message voice. Also, when the central control unit 857 receives the open signal from the detection unit 842, the central control unit 857 generates a camera drive signal. The central control unit 857 transmits the open signal and camera drive signal to the entrance slave unit 802 (step S466). Thereby, the camera 821 is driven (step S467). Also, a message "The capturing starts from now on." is output from the speaker 823, based on the open signal (step S467).

Also, the detection unit 842 transmits the open signal to the control unit 873 of the server 807 (step S468). The control unit 873 transmits the open signal to the central control unit 867 of the mobile communication terminal 806 (step S469). The central control unit 867 having received the open signal controls the voice device control unit 864 to output an informing sound from the speaker 863 (step S470). The informing sound is to inform a resident that the door 841 is opened. The informing sound may be a buzzer sound or a message voice.

Since steps S471 and S472 are similar to steps S316 and S317, the descriptions thereof are omitted.

Since steps S473 to S478 are similar to steps S436 to S441, the descriptions thereof are omitted.

Since steps S479 to S481 are similar to steps S318 to S320, the descriptions thereof are omitted.

Since steps S482 to S485 are similar to steps S442 to S445, the descriptions thereof are omitted.

In the seventh embodiment, when the door 841 of the delivery box 804 is opened, the informing sound is output from the speaker 853 of the intercom master unit 805 and the speaker 863 of the mobile communication terminal 806. However, the present invention is not limited thereto. For example, each step from S463 to S470 may be omitted.

According to the configurations of the third to seventh embodiments, since the delivery box 804 is provided with the electric lock 844, the delivery box 804 cannot be opened unless the electric lock 844 is unlocked. Also, when the signal for unlocking the electric lock 844 is generated, the resident is informed from the terminal 803 that the electric lock 844 is unlocked. For this reason, the resident can recognize a visitor who intends to open the delivery box 804 for the purpose of the mischievous play, in a stage where the electric lock 844 is unlocked. As a result, the resident can take some action against a visitor who intends to open the delivery box 804 for the purpose of the mischievous play.

As such, according to the configurations of the third to seventh embodiments, it is possible to provide the intercom system 801 capable of suppressing an influence of the mischievous play on the delivery box 804 on the resident while preventing the delivery box 804 from being opened due to the mischievous play.

Also, according to the configurations of the third to seventh embodiments, it is informed by the informing sound that the electric lock 844 is unlocked. Therefore, the resident can know that the electric lock 844 is unlocked, without monitoring the terminal 803.

Also, according to the configurations of the third to seventh embodiments, when the signal for unlocking the electric lock 844 is generated, the camera 821 of the entrance slave unit 802 starts capturing of the visitor. For this reason, it is possible to specify the visitor at the time when the electric lock 844 is unlocked. Also, when the captured data is configured to be saved, it is possible to secure an evidence indicating that the visitor has unlocked the electric lock 844.

Also, according to the configurations of the third to seventh embodiments, the electric lock 844 of the delivery box 804 is unlocked only when the visitor is a delivery person. For this reason, it is possible to further prevent the electric lock 844 from being unlocked by a visitor who has the purpose of the mischievous play.

Also, according to the configurations of the third to seventh embodiments, when the door 841 of the delivery box 804 is in the opened state, the informing sound is output from the terminal 803. For this reason, the resident can know whether the door 841 of the delivery box 804 is actually opened after the electric lock 844 is unlocked.

Also, according to the configurations of the third to seventh embodiments, when the resident determines that the visitor tries to open the delivery box 804 for the purpose of the mischievous play, the resident operates the operation unit 855 to output an alert or a voice from the speaker 823 of the entrance slave unit 802. For this reason, it is possible to suppress the door 841 of the delivery box 804 from being opened by a visitor who has the purpose of the mischievous play.

In the third to seventh embodiments, the resident performs the alert output operation, so that a message including a warning to a visitor, an alert sound or the like is output from the speaker 823. However, the present invention is not limited thereto. For example, when an image indicating that a visitor is a delivery person is not captured for a predetermined time by the camera 821, a message including a warning to a visitor, an alert sound or the like may be automatically output from the speaker 823. Also, when a predetermined time further elapses, the delivery mode of the entrance slave unit 802 is released.

In the meantime, the present invention is not limited to the above embodiments, and can be appropriately changed and modified. In addition, the materials, shapes, sizes, values, forms, numbers, arrangement places and the like of the constitutional elements in the above embodiments are arbitrary and are not particularly limited inasmuch as the present invention can be achieved.

The subject application is based on Japanese Patent Application Nos. 2018-033332, 2018-033333, 2018-033334, 2018-033335, and 2018-033336 filed on February 27, 2018, the contents of which are incorporated herein by reference.

## Claims

1. A doorbell comprising:
an operation unit capable of performing a calling operation;
a camera;
a microphone;
a speaker; and
a control unit connected to the operation unit, the camera, the microphone and the speaker, and capable of performing direct or indirect communication with an external device in which delivery item information relating to a delivery item is recorded,
wherein the control unit is configured to acquire the delivery item information from the external device, and based on the delivery item information, to transmit a delivery notification of the delivery item to an information terminal associated with a resident of a residence to which the doorbell is attached.

2. The doorbell according to Claim 1, wherein the control unit is configured to receive a reply notification from the information terminal having received the delivery notification, and to perform an automatic reception operation for automatically receiving the delivery item, based on the reply notification.

3. The doorbell according to Claim 2, wherein the automatic reception operation comprises at least one of a voice guide from the speaker and transmission of an automatic receipt to the external device.

4. A doorbell comprising:
an operation unit capable of performing a calling operation;
a camera;
a microphone;
a speaker; and
a control unit connected to the operation unit, the camera, the microphone and the speaker, and capable of performing communication with an external device in which delivery item information relating to a delivery item is recorded,
wherein the control unit is configured to change a capturing range of the camera, based on the delivery item information.

5. The doorbell according to Claim 4, wherein the capturing range comprises a vicinity of a lower part of the doorbell within a predetermined time from a delivery time included in the delivery item information, and comprises a part ahead of the doorbell after the predetermined time elapses.

6. The doorbell according to Claim 4 or 5, wherein the control unit is configured to transmit an image of the delivery item captured by the camera within a predetermined time from a delivery time of the delivery item to an information terminal associated with the doorbell, based on the delivery item information.

7. The doorbell according to Claim 6, wherein when it is determined that the delivery item has disappeared from the image, the control unit transmits an alarm, which indicates that the delivery item is not included in the image, to the information terminal.

8. The doorbell according to Claim 6 or 7, wherein when it is determined that the delivery item has disappeared from the image, the control unit outputs an alarm voice, which indicates that the delivery item is not included in the image, from the speaker.

9. The doorbell according to one of Claims 4 to 8, wherein the control unit is configured to transmit a delivery notification of the delivery item to an information terminal associated with the doorbell, based on the delivery item information, to receive a reply notification from the information terminal having received the delivery notification, and to perform an automatic reception operation for automatically receiving the delivery item, based on the reply notification, and
wherein the delivery time comprises a time at which the automatic reception operation has been performed.

10. A key management system comprising:
a doorbell;
a key for opening an entrance door; and
a key box in which the key can be kept,
wherein at least one of the doorbell and the key box comprises a camera capable of reading a two-dimensional code, and
wherein when a two-dimensional code in which password information for releasing a closed state of the key box is embedded is read by the camera, the closed state of the key box is released.

11. A key management system comprising:
a doorbell;
a key for opening an entrance door; and
a key box in which the key can be kept,
wherein the doorbell comprises:
a camera capable of capturing a face of a visitor,
a storage unit in which face information can be stored, and
a determination unit configured to compare an image captured by the camera and the face information stored in the storage unit, and to determine whether or not a same person,
wherein the doorbell can perform communication with the key box, and
wherein when the determination unit determines that a person captured in the image matches a person associated with the face information, a closed state of the key box is released.

12. A key management system comprising:
a doorbell;
a key for opening an entrance door; and
a key box in which the key can be kept,
wherein the doorbell comprises:
a fingerprint recognition unit capable of reading a fingerprint of a visitor,
a storage unit in which fingerprint information can be stored, and
a determination unit configured to compare the fingerprint read by the fingerprint recognition unit and the fingerprint information stored in the storage unit and to determine whether or not a same person,
wherein the doorbell can perform communication with the key box, and
wherein when the determination unit determines that the fingerprint read by the fingerprint recognition unit matches the fingerprint information stored in the storage unit, a closed state of the key box is released.

13. A key management system comprising:
a doorbell;
a key for opening an entrance door; and
a key box in which the key can be kept,
wherein the doorbell comprises an operation unit to which password information for releasing a closed state of the key box can be input, and
wherein when a predetermined password is input to the operation unit, the closed state of the key box is released.

14. The key management system according to Claim 13, wherein the predetermined password is changed when a predetermined time elapses.

15. The key management system according to one of Claims 10 to 14, wherein the entrance door comprises a sensor configured to detect that the entrance door is opened and a notification unit configured to notify a terminal of a resident that the entrance door is opened,
wherein the doorbell can perform communication with the entrance door and the terminal of the resident via a network, and
wherein when the sensor detects that the entrance door is opened, the notification unit notifies the terminal of the resident that the entrance door is opened.

16. The key management system according to one of Claims 10 to 15, wherein the doorbell comprises a camera, and
wherein when the closed state of the key box is released, the camera of the doorbell starts capturing.

17. The key management system according to one of Claims 10 to 16, wherein when the closed state of the key box is released, a terminal of a resident is notified that the closed state of the key box is released.

18. The key management system according to Claim 17, wherein the doorbell comprises a camera, and
wherein when the terminal of the resident is notified that the closed state of the key box is released, the doorbell transmits, to the terminal of the resident, an image captured by the camera of the doorbell after the closed state of the key box is released.

19. The key management system according to one of Claims 10 to 18, further comprising an in-house camera provided in a residence,
wherein when the entrance door is opened, the in-house camera starts capturing.

20. The key management system according to Claim 10 or 11, wherein when the key is kept in the key box in a state where the key is not kept in the key box, the camera of the doorbell captures a visitor.

21. The key management system according to one of Claims 10 to 20, wherein the key box is provided with a camera capable of capturing a visitor, and
wherein when the key is kept in the key box in a state where the key is not kept in the key box, the camera of the key box captures a visitor.

22. An intercom system comprising:
an entrance slave unit that is operated by a visitor;
a terminal configured to respond to a calling from the entrance slave unit; and
a delivery box in which a delivery item can be accommodated,
wherein the entrance slave unit, the terminal, the delivery box can perform communication,
wherein the delivery box comprises a door and a detection unit configured to detect an opened state of the door,
wherein when the detection unit detects that the door is opened, the detection unit transmits an open signal to the terminal, and
wherein when the terminal receives the open signal, the terminal informs a resident that the door is opened.

23. The intercom system according to Claim 22, wherein the informing is performed by outputting an informing sound.

24. The intercom system according to Claim 22 or 23, wherein when the detection unit detects the opened state of the door, a notification sound for notifying the opened state is output from the entrance slave unit.

25. The intercom system according to one of Claims 22 to 24, wherein the entrance slave unit comprises a camera, and
wherein when the detection unit detects the opened state of the door, the camera starts capturing.

26. The intercom system according to one of Claims 22 to 25, wherein the delivery box has an electric lock for keeping a closed state of the door,
wherein the entrance slave unit has a camera, and
wherein when the entrance slave unit detects that an image indicating that a visitor is a delivery person is captured by the camera, the electric lock is unlocked.

27. The intercom system according to one of Claims 22 to 26, wherein the terminal comprises an operation unit for outputting an alert or a voice from the entrance slave unit, and
wherein when an operation is performed via the operation unit, an alert or a voice is output from the entrance slave unit.

28. An intercom system comprising:
an entrance slave unit that is operated by a visitor;
a terminal configured to respond to a calling from the entrance slave unit; and
a delivery box in which a delivery item can be accommodated,
wherein the entrance slave unit, the terminal, the delivery box can perform communication,
wherein the delivery box comprises a door and an electric lock for keeping a closed state of the door, and
wherein when a signal for unlocking the electric lock is generated, the terminal informs a resident that the electric lock is unlocked.

29. The intercom system according to Claim 28, wherein the informing is performed by outputting an informing sound.

30. The intercom system according to Claim 28 or 29, wherein the entrance slave unit comprises a camera, and
wherein when the signal is generated, the camera starts capturing.

31. The intercom system according to one of Claims 28 to 30, wherein the entrance slave unit comprises a camera, and
wherein when the entrance slave unit detects that an image, which indicates that a visitor is a delivery person, is captured by the camera, the signal is generated.

32. The intercom system according to one of Claims 28 to 31, wherein the delivery box comprises a detection unit configured to detect an opened state of the door, and
wherein when the detection unit detects an opened state of the door, a notification sound for notifying the opened state of the door is output from the terminal.

33. The intercom system according to one of Claims 28 to 32, wherein the terminal comprises an operation unit for outputting an alert or a voice from the entrance slave unit, and
wherein when an operation is performed via the operation unit, an alert or a voice is output from the entrance slave unit.
